# EUROPEAN PATENT APPLICATION

(11) **EP 4 804 656 A1**
(43) Date of publication of application: **09.09.2026**
(21) Application number: 24895321.8
(22) Date of filing: 22.02.2024
(51) Int. Cl.: H04W 56/00

(54) **SIGNAL SYNCHRONIZATION METHOD AND SYSTEM, WIRELESS MANAGEMENT STATION AND TERMINAL STATION, AND STORAGE MEDIUM**

(30) Priority: 29.11.2023 CN 202311614607
(71) Applicant: Shenzhen Inovance Technology Co., Ltd., Shenzhen, Guangdong 518000 (CN)
(72) Inventor: ZHOU, Xiong, Shenzhen, Guangdong 518000 (CN); HUANG, Yixiang, Shenzhen, Guangdong 518000 (CN); LI, Changgeng, Shenzhen, Guangdong 518000 (CN); RUAN, Shuisheng, Shenzhen, Guangdong 518000 (CN); JIN, Xing, Shenzhen, Guangdong 518000 (CN)
(74) Representative: Osterhoff, Utz
(86) International application number: PCT/CN2024/078069
(87) International publication number: WO 2025/112207

(57) **Abstract**

The present application discloses a signal synchronization method, a signal synchronization system, a wireless management station and a terminal station, and a storage medium. The method includes: determining a signal synchronization mode according to an air interface time slot type of a current wireless network; determining synchronization information corresponding to a synchronization signal based on the signal synchronization mode; and sending the synchronization information to a wireless terminal station, so that the wireless terminal station can perform synchronization processing on the synchronization signal based on the synchronization information.

## Description

### CROSS-REFERENCE TO RELATED APPLICATIONS

The present application claims priority to Chinese Patent Application No. 202311614607.4, filed on November 29, 2023, the entire contents of which are incorporated herein by reference.

### TECHNICAL FIELD

The present application relates to the technical field of industrial communication, and in particular, to a signal synchronization method, a signal synchronization system, a wireless management station, a terminal station, and a storage medium.

### BACKGROUND

With the development of digitalization, intelligence, and distributed deployment trends in industrial control, maintaining synchronization among decentralized nodes has become an increasingly prominent requirement. In the field of industrial control, especially in motion control, a manufacturing process usually requires a group of devices to collaboratively complete a set of actions, and the actions executed by different devices need to have high-precision coordination or orderly execution. Therefore, synchronization technology is required to ensure that decentralized nodes can obtain the same synchronization signal, thereby ensuring that each node can achieve synchronization in time, and further ensuring that the time point at which each node executes actions according to instructions meets design requirements.

In network topologies (such as star networks, linear networks, tree networks, etc.), a widely adopted synchronization mechanism is to implement synchronization by transmitting timestamps and calculating link delays through synchronization protocols. For example, the timestamp-based timing synchronization mechanisms adopted by the IEEE 1588 protocol, IEEE 802.1AS, and IEEE 802.1AS.REV achieve this by having both nodes transmit and receive data once respectively. The master station carries a timestamp in the data packet, and the terminal station records the local time of reception, thereby calculating the transmission delay of the link.

In industrial wired networks, the synchronization mechanisms provided by existing synchronization protocols can already achieve good results through link delay measurement. However, after introducing them into wireless networks, due to reasons such as possible time-division multiplexing of wireless resources (different nodes may transmit in different time slots, and data packets transmitted in the same time slot may be processed at different times), differences in transmission delays between nodes, and potentially rapid changes in transmission delays between nodes, it is difficult to guarantee the synchronization effect if a wired-wireless converged industrial network adopts the above-mentioned synchronization protocol methods for synchronization.

### SUMMARY

Embodiments of the present application provide a signal synchronization method, a signal synchronization system, a wireless management station, a terminal station, and a storage medium, aiming to flexibly determine a corresponding signal synchronization mode according to different wireless network scenarios, so as to achieve signal synchronization in different wireless network scenarios.

An embodiment of the present application provides a signal synchronization method, applied to a wireless management station, the signal synchronization method includes:
obtaining an air interface time slot type of a current wireless network;
determining a signal synchronization mode according to the air interface time slot type; and
determining synchronization information corresponding to a synchronization signal based on the signal synchronization mode, and sending the synchronization information to a wireless terminal station, so that the wireless terminal station performs synchronization processing on the synchronization signal based on the synchronization information.

In an embodiment, the determining the signal synchronization mode according to the air interface time slot type includes:
in response to that the air interface time slot type is a fixed-length air interface time slot type, determining the signal synchronization mode as a first signal synchronization mode or a second signal synchronization mode; and
in response to that the air interface time slot type is a variable-length air interface time slot type, determining the signal synchronization mode as a third signal synchronization mode.

In an embodiment, the in response to that the air interface time slot type is the fixed-length air interface time slot type, determining the signal synchronization mode as the first signal synchronization mode or the second signal synchronization mode includes:
obtaining a signal synchronization period in a current wired network, and obtaining a wireless frame length and a time slot length;
in response to that the signal synchronization period is an integer multiple of the wireless frame length and the signal synchronization period is an integer multiple of the time slot length, determining the signal synchronization mode as the first signal synchronization mode;
in response to that the signal synchronization period is not an integer multiple of the wireless frame length and the signal synchronization period is an integer multiple of the time slot length, determining the signal synchronization mode as the second signal synchronization mode; and
in response to that the signal synchronization period is not an integer multiple of the wireless frame length and the signal synchronization period is not an integer multiple of the time slot length, determining the signal synchronization mode as the second signal synchronization mode.

In an embodiment, the determining the synchronization information corresponding to the synchronization signal based on the signal synchronization mode includes:
in response to that the signal synchronization mode is the first signal synchronization mode, determining a frame identifier of a reference wireless frame;
determining a time difference between a start position of a latest synchronization signal and a start position of the reference wireless frame, where the time difference is greater than or equal to 0 and the time difference is less than the signal synchronization period in a wired network;
measuring a wireless transmission delay between the wireless management station and the wireless terminal station;
obtaining the signal synchronization period in the current wired network, and obtaining the wireless frame length; and
determining the signal synchronization period, the wireless frame length, the frame identifier of the reference wireless frame, the time difference, and the wireless transmission delay as the synchronization information corresponding to the synchronization signal.

In an embodiment, the determining the synchronization information corresponding to the synchronization signal based on the signal synchronization mode includes:
in response to that the signal synchronization mode is the second signal synchronization mode, determining a time slot identifier of a reference time slot and a frame identifier of a reference wireless frame where the reference time slot is located;
determining a time difference between a start position of a latest synchronization signal and a start position of the reference time slot, where the time difference is greater than or equal to 0 and the time difference is less than the signal synchronization period in the current wired network;
measuring a wireless transmission delay between the wireless management station and the wireless terminal station;
obtaining the signal synchronization period in the current wired network, and obtaining the wireless frame length and the time slot length; and
determining the signal synchronization period, the wireless frame length, the time slot length, the frame identifier of the reference wireless frame, the time slot identifier of the reference time slot, the time difference, and the wireless transmission delay as the synchronization information corresponding to the synchronization signal.

In an embodiment, the determining the synchronization information corresponding to the synchronization signal based on the signal synchronization mode includes:
in response to that the signal synchronization mode is the third signal synchronization mode, determining a time slot identifier of a reference time slot;
determining a time difference between a start position of the reference time slot and an end position of a designated synchronization signal;
measuring a wireless transmission delay between the wireless management station and the wireless terminal station;
obtaining the signal synchronization period in the current wired network; and
determining the signal synchronization period, the time difference, the wireless transmission delay, and the time slot identifier of the reference time slot as the synchronization information corresponding to the synchronization signal.

Embodiments of the present application provide a signal synchronization method, applied to a wireless terminal station, including:
determining a signal synchronization mode of a current wireless network;
receiving synchronization information sent by a wireless management station based on the signal synchronization mode; and
performing synchronization processing on a synchronization signal based on the signal synchronization mode and the synchronization information, to obtain a local synchronization time of the synchronization signal.

In an embodiment, the receiving the synchronization information sent by the wireless management station based on the signal synchronization mode includes:
in response to that the signal synchronization mode is a first signal synchronization mode, receiving the synchronization information sent by the wireless management station, where the synchronization information includes a signal synchronization period, a wireless frame length, a frame identifier of a reference wireless frame, a time difference, and a wireless transmission delay;
in response to that the signal synchronization mode is a second signal synchronization mode, receiving the synchronization information sent by the wireless management station, where the synchronization information includes a signal synchronization period, a wireless frame length, a time slot length, a frame identifier of a reference wireless frame, a time slot identifier of a reference time slot, a time difference, and a wireless transmission delay; and
in response to that the signal synchronization mode is a third signal synchronization mode, receiving the synchronization information sent by the wireless management station, where the synchronization information includes a signal synchronization period, a time difference, a wireless transmission delay, and a time slot identifier of a reference time slot.

In an embodiment, the performing the synchronization processing on the synchronization signal based on the signal synchronization mode and the synchronization information, to obtain the local synchronization time of the synchronization signal includes:
in response to that the signal synchronization mode is the first signal synchronization mode, determining a first parameter value and a second parameter value according to the time difference, the wireless transmission delay, the signal synchronization period, and the wireless frame length, and determining a wireless frame corresponding to the synchronization signal according to the frame identifier of the reference wireless frame, the signal synchronization period, the wireless frame length, a sequence number of the synchronization signal, and the first parameter value;
determining a start position of the wireless frame corresponding to the synchronization signal; and
delaying the start position based on the second parameter value, to obtain the local synchronization time of the synchronization signal.

In an embodiment, the determining the first parameter value and the second parameter value according to the time difference, the wireless transmission delay, the signal synchronization period, and the wireless frame length, and determining the wireless frame corresponding to the synchronization signal according to the frame identifier of the reference wireless frame, the signal synchronization period, the wireless frame length, the sequence number of the synchronization signal, and the first parameter value includes:
determining a total time according to the time difference and the wireless transmission delay;
determining whether the signal synchronization period is greater than the total time;
in response to that the signal synchronization period is greater than the total time, setting T-(dt0+dt1)=k*F+j, and determining the wireless frame corresponding to the synchronization signal according to f(n)=f0+T/F*(n-1)+k;
in response to that the signal synchronization period is less than or equal to the total time, setting 2T-(dt0+dt1)=k*F+j, and determining the wireless frame corresponding to the synchronization signal according to f(n)=f0+T/F*(n-2)+k,
where T is the signal synchronization period, dt0 is the time difference, dt1 is the wireless transmission delay, k is the first parameter value, F is the wireless frame length, j is the second parameter value, f0 is the frame identifier of the reference wireless frame, n is the sequence number of the synchronization signal, the n is a positive integer, the first parameter value is a non-negative integer, and the second parameter value is greater than 0 and less than the wireless frame length.

In an embodiment, the performing the synchronization processing on the synchronization signal based on the signal synchronization mode and the synchronization information, to obtain the local synchronization time of the synchronization signal includes:
in response to that the signal synchronization mode is the second signal synchronization mode, determining a first parameter value and a second parameter value according to the time difference, the wireless transmission delay, the signal synchronization period, and the wireless frame length, and determining a time slot corresponding to the synchronization signal according to the time slot identifier of the reference time slot, the signal synchronization period, the time slot length, a sequence number of the synchronization signal, and the first parameter value;
determining a frame identifier of a wireless frame where the time slot corresponding to the synchronization signal is located, according to the time slot corresponding to the synchronization signal, a number of time slots in a single wireless frame, and the frame identifier of the reference wireless frame;
determining a time slot identifier corresponding to the synchronization signal in the wireless frame, according to the time slot corresponding to the synchronization signal and the number of time slots in the single wireless frame;
determining a start position of a time slot corresponding to the time slot identifier; and
delaying the start position of the time slot corresponding to the time slot identifier based on the second parameter value, to obtain the local synchronization time of the synchronization signal.

In an embodiment, determining the first parameter value and the second parameter value according to the time difference, the wireless transmission delay, the signal synchronization period, and the wireless frame length, and determining the time slot corresponding to the synchronization signal according to the time slot identifier of the reference time slot, the signal synchronization period, the time slot length, the sequence number of the synchronization signal, and the first parameter value includes:
determining a total time according to the time difference and the wireless transmission delay;
determining whether the signal synchronization period is greater than the total time;
in response to that the signal synchronization period is greater than the total time, setting T-(dt0+dt1)=k*F+j, and determining the time slot corresponding to the synchronization signal according to u(n)=p0+T/S*(n-1)+k;
in response to that the signal synchronization period is less than or equal to the total time, setting 2T-(dt0+dt1)=k*F+j, and determining the time slot corresponding to the synchronization signal according to u(n)=p0+T/S*(n-2)+k,
where T is the signal synchronization period, dt0 is the time difference, dt1 is the wireless transmission delay, k is the first parameter value, F is the wireless frame length, j is the second parameter value, p0 is the time slot identifier of the reference time slot, S is the time slot length, n is the sequence number of the synchronization signal, the n is a positive integer, the first parameter value is a non-negative integer, and the second parameter value is greater than 0 and less than the wireless frame length.

In an embodiment, the determining the frame identifier of the wireless frame where the time slot corresponding to the synchronization signal is located, according to the time slot corresponding to the synchronization signal, the number of time slots in the single wireless frame, and the frame identifier of the reference wireless frame includes:
determining the frame identifier of the wireless frame where the time slot corresponding to the synchronization signal is located according to f(n)=f0+floor(u(n)/P),
where the f0 is the frame identifier of the reference wireless frame, u(n) is the time slot corresponding to the synchronization signal, P is the number of time slots in the single wireless frame, and floor(u(n)/P) represents an integer part of u(n)/P.

In an embodiment, the determining the time slot identifier corresponding to the synchronization signal in the wireless frame, according to the time slot corresponding to the synchronization signal and the number of time slots in the single wireless frame includes:
determining the time slot identifier corresponding to the synchronization signal in the wireless frame according to q(n)=mod(u(n), P),
where the u(n) is the time slot corresponding to the synchronization signal, P is the number of time slots in the single wireless frame, and mod(u(n), P) represents a fractional part of u(n)/P.

In an embodiment, the performing the synchronization processing on the synchronization signal based on the signal synchronization mode and the synchronization information, to obtain the local synchronization time of the synchronization signal includes:
in response to that the signal synchronization mode is the third signal synchronization mode, determining a reference time slot corresponding to the time difference, and obtaining a reception time of the reference time slot;
determining a generation time of the synchronization signal according to the reception time of the reference time slot, the wireless transmission delay, the time difference, a sequence number of the synchronization signal, and the signal synchronization period; and
setting a timer at the generation time of the synchronization signal, and determining a timeout moment of the timer as the local synchronization time of the synchronization signal, where a timing duration of the timer is the same as the signal synchronization period.

In an embodiment, the determining the generation time of the synchronization signal according to the reception time of the reference time slot, the wireless transmission delay, the time difference, the sequence number of the synchronization signal, and the signal synchronization period includes:
determining the generation time of the synchronization signal according to t(n)=t0-dt1+dt0+n*T,
where t0 is the reception time of the reference time slot, dt1 is the wireless transmission delay, dt0 is the time difference, n is the sequence number of the synchronization signal, and T is the signal synchronization period.

In an embodiment, after the performing the synchronization processing on the synchronization signal based on the signal synchronization mode and the synchronization information, to obtain the local synchronization time of the synchronization signal, the method further includes:
receiving a reference synchronization signal sent by the wireless management station, and an absolute time of the reference synchronization signal; and
determining a local absolute time according to the reference synchronization signal and the absolute time.

In addition, to achieve the above objective, the present application further provides a signal synchronization system, the signal synchronization system includes:
a time slot type acquiring module, configured to acquire an air interface time slot type of a current wireless network;
a first signal synchronization mode determination module, configured to determine a signal synchronization mode according to the air interface time slot type; and
a sending module, configured to determine synchronization information corresponding to a synchronization signal based on the signal synchronization mode, and send the synchronization information to a wireless terminal station, so that the wireless terminal station performs synchronization processing on the synchronization signal based on the synchronization information; or
the signal synchronization system includes:
   a second signal synchronization mode determination module, configured to determine a signal synchronization mode of a current wireless network;
   a receiving module, configured to receive synchronization information sent by a wireless management station based on the signal synchronization mode; and
   a synchronization processing module, configured to perform synchronization processing on a synchronization signal based on the signal synchronization mode and the synchronization information, to obtain a local synchronization time of the synchronization signal.

In addition, to achieve the above objective, the present application further provides a wireless management station, including: a memory, a processor, and a signal synchronization program stored on the memory and executable on the processor, when the signal synchronization program is executed by the processor, the steps of the above signal synchronization method are implemented.

In addition, to achieve the above objective, the present application further provides a wireless terminal station, including: a memory, a processor, and a signal synchronization program stored on the memory and executable on the processor, when the signal synchronization program is executed by the processor, the steps of the above signal synchronization method are implemented.

In addition, to achieve the above objective, the present application further provides a computer-readable storage medium, on which a signal synchronization program is stored, when the signal synchronization program is executed by a processor, the steps of the above signal synchronization method are implemented.

In the technical solutions of the signal synchronization method, the signal synchronization system, the wireless management station and the terminal station, and the storage medium provided in the embodiments of the present application, the present application can determine a signal synchronization mode according to an air interface time slot type of a current wireless network, determine synchronization information corresponding to a synchronization signal based on the signal synchronization mode, and send the synchronization information to a wireless terminal station, so that the wireless terminal station can perform synchronization processing on the synchronization signal based on the synchronization information. Because it is possible to flexibly determine a corresponding signal synchronization mode for different wireless network scenarios and send corresponding synchronization information to the wireless terminal station, the wireless terminal station can perform synchronization processing on the synchronization signal based on the synchronization information, thereby satisfying signal synchronization in different wireless network scenarios.

### BRIEF DESCRIPTION OF THE DRAWINGS

FIG. 1 is a schematic diagram of a topology structure of a wired-wireless network according to the present application.
FIG. 2 is a flow chart illustrating a signal synchronization method according to a first embodiment of the present application.
FIG. 3 is a schematic diagram of different air interface time slots according to the present application.
FIG. 4 is a schematic diagram where T is an integer multiple of F under a fixed-length air interface time slot type according to the present application.
FIG. 5 is a schematic diagram where T is not an integer multiple of F but T is an integer multiple of S, and T is less than F under a fixed-length air interface time slot according to the present application.
FIG. 6 is a schematic diagram where T is not an integer multiple of F but T is an integer multiple of S, and T is greater than F under a fixed-length air interface time slot according to the present application.
FIG. 7 is a schematic diagram where T is not an integer multiple of S under a fixed-length air interface time slot according to the present application.
FIG. 8 is a schematic diagram of a variable-length air interface time slot according to the present application.
FIG. 9 is a schematic diagram of a time difference and a wireless transmission delay in a first signal synchronization mode according to the present application.
FIG. 10 is another schematic diagram of a time difference and a wireless transmission delay in the first signal synchronization mode according to the present application.
FIG. 11 is a schematic diagram of a time difference and a wireless transmission delay in a second signal synchronization mode according to the present application.
FIG. 12 is a schematic diagram of a time difference and a wireless transmission delay in a third signal synchronization mode according to the present application.
FIG. 13 is a flow chart of the signal synchronization method according to a sixth embodiment of the present application.
FIG. 14 is a flow chart of the first signal synchronization mode according to the present application.
FIG. 15 is a schematic diagram of recovering a synchronization signal under the first signal synchronization mode according to the present application.
FIG. 16 is a flow chart of the second signal synchronization mode according to the present application.
FIG. 17 is a schematic diagram of recovering a synchronization signal under the second signal synchronization mode according to the present application.
FIG. 18 is a flow chart of a wireless terminal station under the third signal synchronization mode according to the present application.
FIG. 19 is a schematic diagram of recovering a synchronization signal under the third signal synchronization mode according to the present application.
FIG. 20 is a flow chart of a wireless management station under the third signal synchronization mode according to the present application.
FIG. 21 is a functional module diagram of a signal synchronization system according to the present application.
FIG. 22 is another functional module diagram of the signal synchronization system according to the present application.
FIG. 23 is a schematic structural diagram of a hardware operating environment involved in the embodiment of the present application.
FIG. 24 is a flowchart of an eleventh embodiment of the present application.

The realization of the purpose, functional features and advantages of the present application will be further explained in conjunction with the embodiments and with reference to the accompanying drawings. The accompanying drawings are only one embodiment diagram and not the entirety of the present application.

### DETAILED DESCRIPTION OF THE EMBODIMENTS

In order to better understand the above technical solutions, exemplary embodiments of the present application will be described in more detail below with reference to the accompanying drawings. Although exemplary embodiments of the present application are shown in the accompanying drawings, it should be understood that the present application may be implemented in various forms and should not be limited by the embodiments set forth herein. Rather, these embodiments are provided so that the present application will be thorough and complete, and will fully convey the scope of the present application to those skilled in the art.

To address the above problems, the present application proposes a signal synchronization method. At a wireless management station, the signal synchronization method of the present application includes: obtaining an air interface time slot type of a current wireless network; determining a signal synchronization mode according to the air interface time slot type; and determining synchronization information corresponding to a synchronization signal based on the signal synchronization mode, and sending the synchronization information to a wireless terminal station, so that the wireless terminal station performs synchronization processing on the synchronization signal based on the synchronization information. At the wireless terminal station, the signal synchronization method of the present application includes: determining a signal synchronization mode of a current wireless network; receiving synchronization information sent by a wireless management station based on the signal synchronization mode; and performing synchronization processing on a synchronization signal based on the signal synchronization mode and the synchronization information, to obtain a local synchronization time of the synchronization signal. Because it is possible to flexibly determine a corresponding signal synchronization mode for different wireless network scenarios and send corresponding synchronization information to the wireless terminal station, the wireless terminal station can perform synchronization processing on the synchronization signal based on the synchronization information, thereby satisfying signal synchronization in different wireless network scenarios and improving the signal synchronization effect.

In addition, adopting the above technical solutions can solve the problem in the related art where a synchronization mechanism based on a common clock source provides timing synchronization for nodes in different network topologies, that is, configuring the same clock source (such as a GNSS clock, an external clock source, etc.) for all nodes, and synchronizing all nodes to the same clock source to ensure that different nodes remain synchronized. The method of using a common clock source is difficult to implement in application scenarios within a factory, has poor operability, poor flexibility, poor practicability, and is expensive. The present application does not require the use of a common clock source, and completes the synchronization of different types of nodes by combining wired synchronization signals, wireless synchronization signals, air interface signaling, and other information.

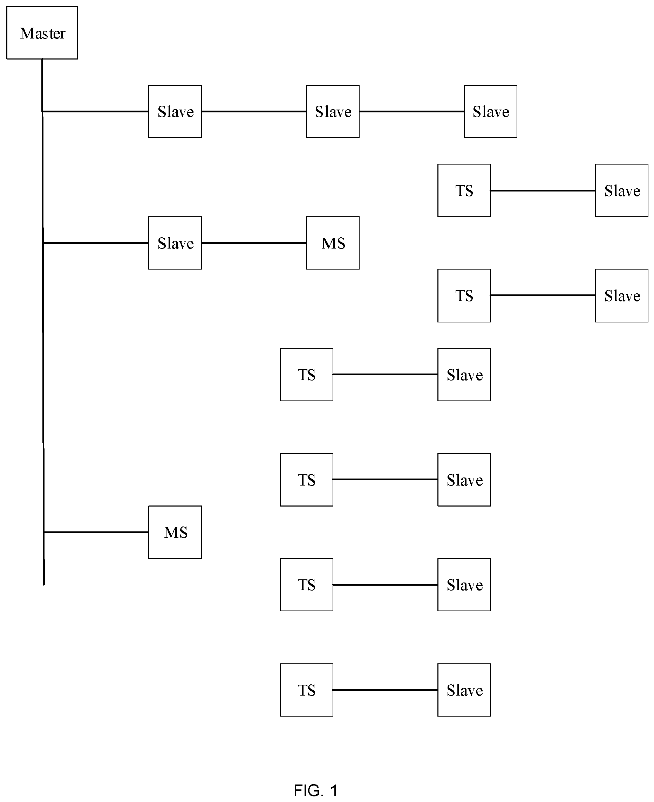

In an embodiment, the signal synchronization method of the present application can also be applied to a wired-wireless converged network. For example, as shown in FIG. 1, the wired-wireless converged network includes four types of nodes: a master station ("Master" in FIG. 1), a slave station ("Slave" in FIG. 1, where the slave stations are divided into three types: slave stations directly connected to the master station, slave stations connected to the master station through forwarding by a slave station, and slave stations connected to the master station through forwarding by a wireless link), a wireless management station ("MS" in FIG. 1), and a wireless terminal station ("TS" in FIG. 1). The connection topology of the wired network can be in various forms (e.g., bus type, linear type, star type, tree type, etc.), and the MS and multiple TSs in the wireless network form a star network.

The master station and slave stations in the wired network can already complete synchronization through existing mechanisms. The present application assumes that the master station and slave stations in the wired network are already synchronized, that is, the MS and the wired network are synchronized.

In an embodiment, the synchronization between the MS and the wired network in the present application can be implemented by transmitting timestamps and calculating link delays through synchronization protocols. For example, the timestamp-based timing synchronization mechanisms adopted by the IEEE 1588 protocol, IEEE 802.1AS, and IEEE 802.1AS.REV involve each node sending and receiving data once, with the sending end carrying a timestamp in the data packet and the receiving end recording the local time of reception, thereby calculating the transmission delay of the link. Signal delay is performed based on this transmission delay to achieve synchronization of wired signals.

In an embodiment, the synchronization between the MS and the wired network in the present application can provide timing synchronization for nodes in different network topologies based on a synchronization mechanism of a common clock source, that is, configuring the same clock source (such as a GNSS clock, an external clock source, etc.) for all nodes, and synchronizing all nodes to the same clock source, thereby ensuring that different nodes remain synchronized.

The focus of the present application is to solve the synchronization problem after the wireless link between the MS and the TS, that is, the synchronization between the slave station directly connected to the TS (the gray-filled square in FIG. 1) and the master station and slave stations in the wired network.

In an embodiment, the wireless network of the present application may adopt a frame structure with fixed-length time slots or a frame structure with variable-length time slots.

In an embodiment, when the wireless network adopts a frame structure with fixed-length time slots, the present application includes a synchronization method for a scenario where the signal synchronization period is an integer multiple of the wireless frame length (refer specifically to a third embodiment and an eighth embodiment), a synchronization method for a scenario where the signal synchronization period is not an integer multiple of the wireless frame length but the signal synchronization period is an integer multiple of the time slot length (refer specifically to a fourth embodiment and a ninth embodiment), and a synchronization method for a scenario where the signal synchronization period is not an integer multiple of the wireless frame length and the signal synchronization period is not an integer multiple of the time slot length (refer specifically to a fourth embodiment and a ninth embodiment).

In an embodiment, when the wireless network adopts a frame structure with variable-length time slots, the synchronization method for the wireless network of the present application refers specifically to a fifth embodiment and a tenth embodiment.

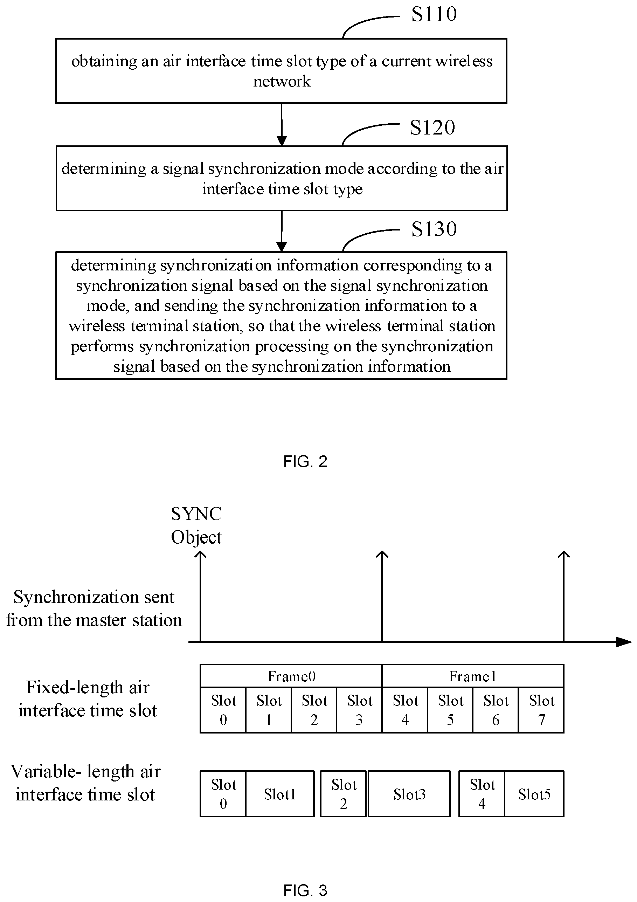

As shown in FIG. 2, in a first embodiment of the present application, the signal synchronization method of the present application is applied to a wireless management station, and the wireless management station may be a base station, a management station, a control station, etc. Specifically, the signal synchronization method of the present application includes:
step S110, obtaining an air interface time slot type of a current wireless network.

In this embodiment, according to the different use of air interface resources in the wireless network of the present application, the wireless network may adopt a frame structure with fixed-length time slots or a frame structure with variable-length time slots.

As shown in FIG. 3, they can be divided into two main categories: the first category is a wireless network with fixed-length air interface time slots, where time slots are divided according to a fixed length in time (that is, the time slot length is fixed), adjacent time slots are closely connected, and several continuous time slots form a wireless frame. The wireless management station can allocate time slot resources to the wireless terminal station for data transmission. The second category is a wireless network with variable-length air interface time slots, that is, the time slot length is variable, and there may be time intervals between adjacent time slots.

Step S120, determining a signal synchronization mode according to the air interface time slot type.

Due to possible time-division multiplexing of wireless resources, for example, different device nodes may transmit in different time slots, data packets transmitted in the same time slot may be processed at different times, differences in transmission delays between device nodes, and potentially rapid changes in transmission delays between device nodes, signals sent by the master station (e.g., a control node) to various slave stations (drive nodes) experience varying degrees of delay, making it impossible to achieve signal synchronization of the signals sent by the master station across all slave station devices.

The present application can determine a corresponding signal synchronization mode according to the air interface time slot type in the current wireless network, and synchronize the signals sent by the master station across various slave station devices based on this signal synchronization mode, so that the locally recovered synchronization signal and the synchronization signal sent by the master station can be aligned.

Particularly in the field of industrial control, the signal synchronization processing ensures that decentralized device nodes can obtain the same synchronization signal, ensuring that each device node can achieve synchronization in time, and further ensuring that the time point at which each device node executes actions according to instructions meets design requirements, thereby achieving coordination and orderly execution of different devices in the field of industrial control.

In this embodiment, different air interface time slot types correspond to different signal synchronization modes, so as to achieve signal synchronization according to different wireless network scenarios. The signal synchronization mode is used to synchronize the synchronization signal sent by the master station across all slave stations in the wired-wireless network. The present application proposes multiple different signal synchronization modes according to the differences in the air interface time slot types of the wireless network.

Step S130, determining synchronization information corresponding to a synchronization signal based on the signal synchronization mode, and sending the synchronization information to a wireless terminal station, so that the wireless terminal station performs synchronization processing on the synchronization signal based on the synchronization information.

In this embodiment, the synchronization information refers to information used to process the synchronization signal so that the synchronization signal sent by the master station can be synchronized across all slave stations in the wired-wireless network.

In this embodiment, different signal synchronization modes correspond to different synchronization information, enabling the wireless terminal station to perform corresponding processing on the synchronization signal based on the corresponding synchronization information in different scenarios, so as to meet the signal synchronization processing requirements of different wireless network scenarios.

According to the above technical solutions in this embodiment, the present application can determine a signal synchronization mode according to an air interface time slot type of a current wireless network, determine synchronization information corresponding to a synchronization signal based on the signal synchronization mode, and send the synchronization information to a wireless terminal station, so that the wireless terminal station can perform synchronization processing on the synchronization signal based on the synchronization information. Because it is possible to flexibly determine a corresponding signal synchronization mode for different wireless network scenarios and send corresponding synchronization information to the wireless terminal station, the wireless terminal station can perform synchronization processing on the synchronization signal based on the synchronization information, thereby satisfying signal synchronization requirements in different wireless network scenarios.

Further, based on the first embodiment, in a second embodiment of the present application, step S120 includes:
step S121, in response to that the air interface time slot type is a fixed-length air interface time slot type, determining the signal synchronization mode as a first signal synchronization mode or a second signal synchronization mode; and
step S122, in response to that the air interface time slot type is a variable-length air interface time slot type, determining the signal synchronization mode as a third signal synchronization mode.

In this embodiment, signal synchronization modes corresponding to different air interface time slot types can be preset, which facilitates quickly locating a specific signal synchronization mode based on the air interface time slot type subsequently, meeting the synchronization requirements of different wireless network scenarios, and improving signal synchronization efficiency.

In an embodiment, step S121 includes:
step S1211, obtaining a signal synchronization period in a current wired network, and obtaining a wireless frame length and a time slot length.

In this embodiment, in a wired network, a signal synchronization period refers to a time period that ensures clock synchronization among various devices during data transmission. The importance of this period lies in ensuring that data transmission and communication between different devices can proceed as expected, thereby guaranteeing the normal operation of the network and the accurate transmission of data.

In this embodiment, each wireless frame includes multiple time slots, and the length of each time slot may be the same or different. The wireless frame length refers to the time length occupied by a complete data frame in a wireless communication system. The wireless frame length is an important parameter in a wireless network, which determines key performance indicators such as time slot allocation for data transmission, channel utilization efficiency, and system capacity. The wireless frame length in a wireless network will vary due to different technical standards and systems. The time slot length refers to the minimum unit used to divide time in a wireless network. It represents a length in time used for channel resource allocation and data transmission. The time slot length may be different in different wireless networks.

The following are examples of wireless frame lengths and time slot lengths for some common wireless networks:
Global System for Mobile Communications (GSM): The wireless frame length in a GSM system is 4.615 milliseconds. Each wireless frame contains 8 time slots, and each time slot length is 577 microseconds.

Long-Term Evolution (LTE): The wireless frame length in an LTE system is 1 millisecond. Each wireless frame contains several time slots. Under different LTE bandwidth configurations, each time slot length may be 0.5, 1, or 2 milliseconds.

5G New Radio (NR): The wireless frame length in a 5G NR system is 10 milliseconds. Each wireless frame contains several time slots. Each time slot length can vary according to the configuration, and the shortest can reach 30 microseconds.

In an actual wireless network, the wireless frame length will change according to factors such as technical standards, frequency bands, channel bandwidths, and modulation schemes. The selection of the wireless frame length needs to consider multiple factors such as data transmission requirements, system capacity, and flexibility of time slot allocation, in order to achieve efficient wireless data transmission. The selection of the time slot length is crucial for channel resource allocation and data transmission. It will directly affect performance indicators such as system capacity, throughput, and delay. A shorter time slot length can provide higher flexibility and fine-grained resource allocation, but it will also increase control overhead and the possibility of interference. Conversely, a longer time slot length can reduce control overhead, but may sacrifice resource utilization and flexibility. Therefore, when designing a wireless network system, the selection of the time slot length needs to comprehensively consider multiple factors, including data transmission requirements, system capacity, control overhead, and interference management, to achieve performance optimization and effective resource utilization.

Step S1212, in response to that the signal synchronization period is an integer multiple of the wireless frame length and the signal synchronization period is an integer multiple of the time slot length, determining the signal synchronization mode as the first signal synchronization mode.

Step S1213, in response to that the signal synchronization period is not an integer multiple of the wireless frame length and the signal synchronization period is an integer multiple of the time slot length, determining the signal synchronization mode as the second signal synchronization mode.

Step S1214, in response to that the signal synchronization period is not an integer multiple of the wireless frame length and the signal synchronization period is not an integer multiple of the time slot length, determining the signal synchronization mode as the second signal synchronization mode.

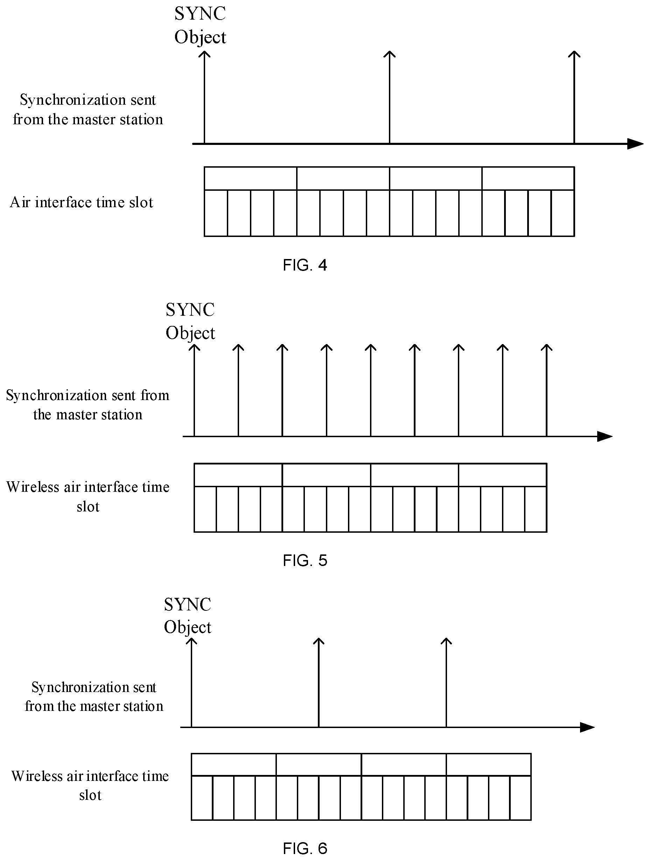

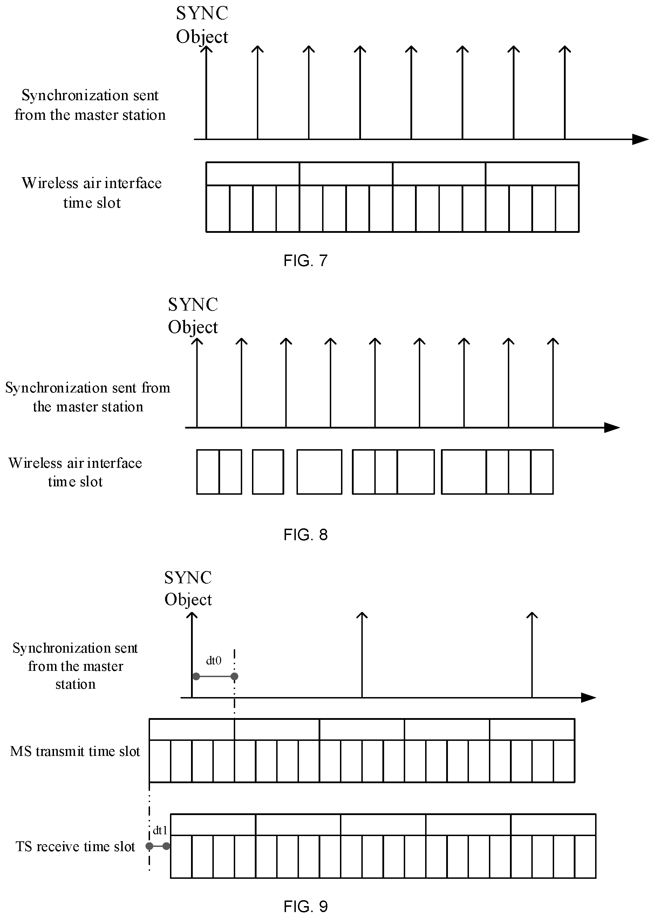

In this embodiment, the signal synchronization period in the wired industrial network is first defined as T, the wireless frame length as F, and the time slot length as S.
(1) When the air interface time slot type is a fixed-length air interface time slot type, if T is an integer multiple of F, and T is an integer multiple of S, the first signal synchronization mode is proposed, as shown in FIG. 4. In FIG. 4, 1 T corresponds to 2 F and 8 S. When T is an integer multiple of F, T is an integer multiple of S.
(2) When the air interface time slot type is a fixed-length air interface time slot type, if T is not an integer multiple of F, but T is an integer multiple of S, the second signal synchronization mode is proposed, as shown in FIG. 5 and FIG. 6. In FIG. 5, T is less than F; in FIG. 6, T is greater than F. In FIG. 5, 1 T corresponds to 2 S, and in FIG. 6, 1 T corresponds to 6 S. T is an integer multiple of S.
(3) When the air interface time slot type is a fixed-length air interface time slot type, if T is neither an integer multiple of F nor an integer multiple of S, the second signal synchronization mode is proposed, as shown in FIG. 7.

According to the above technical solutions in this embodiment, the signal synchronization mode of the current wireless network can be accurately determined according to the signal synchronization period, the wireless frame length, and the time slot length in the current wired network, thereby achieving the determination of the signal synchronization mode in different wireless network scenarios.

In an embodiment, in step S122, when the air interface time slot type is a variable-length air interface time slot type, the third signal synchronization mode is proposed, as shown in FIG. 8.

Further, based on the second embodiment, in a third embodiment of the present application, step S130 includes:
step S131, in response to that the signal synchronization mode is the first signal synchronization mode, determining a frame identifier of a reference wireless frame.

In this embodiment, the reference wireless frame is one of the wireless frames, and one data frame among the wireless frames can be designated as the reference wireless frame. Each wireless frame has a corresponding frame identifier. For example, referring to FIG. 3, the frame identifiers corresponding to the wireless frames are Frame0 and Frame1, and the reference wireless frame can be one of Frame0 or Frame1. The frame identifier of the reference wireless frame is f0. When the frame identifier f0 is 0, the corresponding reference wireless frame is Frame0; when the frame identifier f0 is 1, the corresponding reference wireless frame is Frame1.

Step S132, determining a time difference between a start position of a latest synchronization signal and a start position of the reference wireless frame, where the time difference is greater than or equal to 0 and the time difference is less than the signal synchronization period in the wired network.

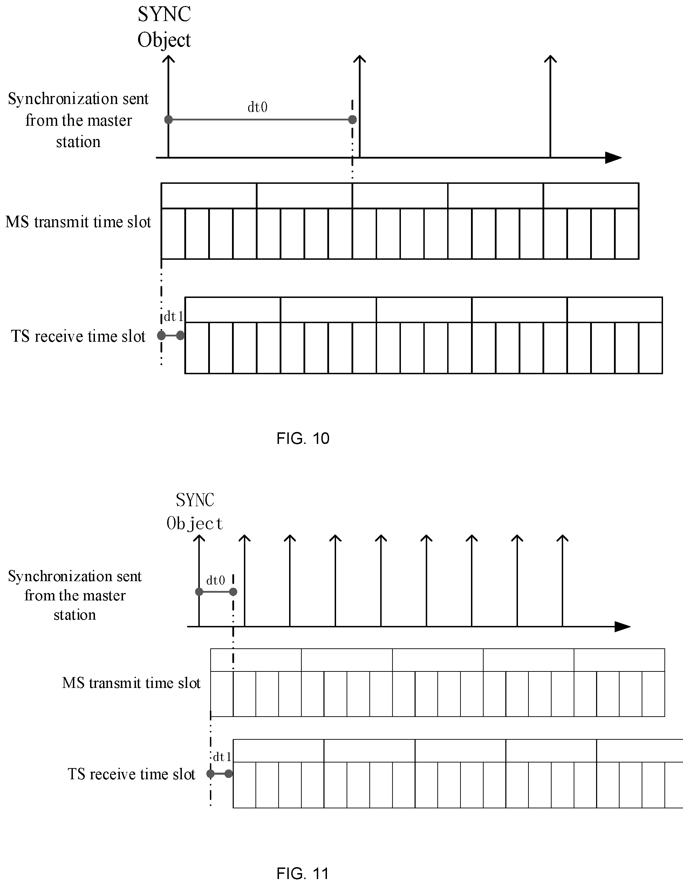

In this embodiment, the latest synchronization signal refers to the newest synchronization signal whose start position is earlier than the start position of the reference wireless frame. The time corresponding to the start position of the latest synchronization signal and the time corresponding to the start position of the reference wireless frame can be acquired, and the time difference between the start position of the latest synchronization signal and the start position of the reference wireless frame is determined according to the difference between these two times. This time difference can be denoted as dt0, such as the dt0 determined in FIG. 9 and FIG. 10. The condition that dt0 needs to satisfy is: dt0≥0 and dt0<T.

Step S133, measuring a wireless transmission delay between the wireless management station and the wireless terminal station.

In this embodiment, the measurement of the wireless transmission delay is already a common method in wireless networks, and is not repeated in the present application. The present application denotes the wireless transmission delay as dt1. Usually, according to the capabilities of the wireless communication system, when dt1 exceeds the design range, the system cannot work. Generally, dt1 is less than one time slot length. Since wireless communication nodes have mobility, the wireless transmission delay may change, and dt1 needs to be continuously updated as communication proceeds. In addition, because different wireless terminal stations are located at different positions, their respective related dt1 are generally different. Therefore, the wireless transmission delay between different wireless management stations and wireless terminal stations is measured individually.

Step S134, obtaining the signal synchronization period in the current wired network, and obtaining the wireless frame length.

Step S135, determining the signal synchronization period, the wireless frame length, the frame identifier of the reference wireless frame, the time difference, and the wireless transmission delay as the synchronization information corresponding to the synchronization signal.

In this embodiment, after receiving the above synchronization information, the wireless management station can package the above synchronization information and notify the wireless terminal station. The signal synchronization period, the wireless frame length, the frame identifier of the reference wireless frame, and the time difference are consistent for all wireless terminal stations, while the wireless transmission delay is specific to each wireless terminal station and may differ among different wireless terminal stations.

According to the above technical solutions in this embodiment, under the fixed-length air interface time slot type, the wireless management station can acquire the synchronization information such as the signal synchronization period, the wireless frame length, the frame identifier of the reference wireless frame, the time difference, and the wireless transmission delay, and send them to the wireless terminal station, thereby achieving the acquisition of synchronization information. This facilitates the subsequent synchronization processing of the synchronization signal by the wireless terminal station based on this synchronization information and in combination with the first signal synchronization mode in this network scenario.

Further, based on the second embodiment, in a fourth embodiment of the present application, step S130 includes:
step S231, in response to that the signal synchronization mode is the second signal synchronization mode, determining a time slot identifier of a reference time slot and a frame identifier of a reference wireless frame where the reference time slot is located.

In this embodiment, the reference wireless frame is one of the wireless frames, and one data frame among the wireless frames can be designated as the reference wireless frame. Each wireless frame has a corresponding frame identifier. For example, referring to FIG. 3, the frame identifiers corresponding to the wireless frames are Frame0 and Frame1, and the reference wireless frame can be one of Frame0 or Frame1. The frame identifier of the reference wireless frame is f0. When the frame identifier f0 is 0, the corresponding reference wireless frame is Frame0; when the frame identifier f0 is 1, the corresponding reference wireless frame is Frame1.

In this embodiment, each wireless frame includes multiple time slots, and the number of time slots can be determined according to actual situations. Moreover, each time slot has a corresponding time slot identifier. In a communication system adopting fixed-length time slots, generally, the number of time slots contained in one wireless frame is fixed, denoted as P. The time slots within each wireless frame are sequentially numbered, denoted as p, where p=0, 1, 2, ..., P-1. One of the time slots in the reference wireless frame can be designated as the reference time slot, and the time slot identifier of the reference time slot is denoted as p0.

For example, referring to FIG. 3, the time slots included in Frame0 are respectively: Slot0, Slot1, Slot2, and Slot3; the time slots included in Frame1 are respectively: Slot4, Slot5, Slot6, and Slot7. The time slot corresponding to the time slot identifier p0 being 1 can be designated as the reference time slot, such as Slot1 or Slot5. Then, the frame identifier of the reference wireless frame where the reference time slot is located can be further designated, such as the frame identifier f0 being 1. Then, what is ultimately determined is the time slot with the time slot identifier "1" in the frame identifier "1" as the reference time slot, that is, Slot5.

Step S232, determining a time difference between a start position of a latest synchronization signal and a start position of the reference time slot, where the time difference is greater than or equal to 0 and the time difference is less than the signal synchronization period in the current wired network.

In this embodiment, the latest synchronization signal refers to the newest synchronization signal whose start position is earlier than the start position of the reference time slot. The time corresponding to the start position of the latest synchronization signal and the time corresponding to the start position of the reference time slot can be acquired, and the time difference between the start position of the latest synchronization signal and the start position of the reference time slot is determined according to the difference between these two times. This time difference can be denoted as dt0, such as the dt0 determined in FIG. 11. The condition that dt0 needs to satisfy is: dt0 ≥0 and dt0<T.

Step S233, measuring a wireless transmission delay between the wireless management station and the wireless terminal station.

In this embodiment, the measurement of the wireless transmission delay is already a common method in wireless networks, and is not repeated in the present application. The present application denotes the wireless transmission delay as dt1. Usually, according to the capabilities of the wireless communication system, when dt1 exceeds the design range, the system cannot work. Generally, dt1 is less than one time slot length. Since wireless communication nodes have mobility, the wireless transmission delay may change, and dt1 needs to be continuously updated as communication proceeds. In addition, because different wireless terminal stations are located at different positions, their respective related dt1 are generally different. Therefore, the wireless transmission delay between different wireless management stations and wireless terminal stations is measured individually.

Step S234, obtaining the signal synchronization period in the current wired network, and obtaining the wireless frame length and the time slot length.

Step S235, determining the signal synchronization period, the wireless frame length, the time slot length, the frame identifier of the reference wireless frame, the time slot identifier of the reference time slot, the time difference, and the wireless transmission delay as the synchronization information corresponding to the synchronization signal.

In this embodiment, after receiving the above synchronization information, the wireless management station can package the above synchronization information and notify the wireless terminal station. The signal synchronization period, the wireless frame length, the time slot length, the frame identifier of the reference wireless frame, the time slot identifier of the reference time slot, and the time difference are consistent for all wireless terminal stations, while the wireless transmission delay is specific to each wireless terminal station and may differ among different wireless terminal stations.

In an embodiment, the time slot identifier of the reference time slot may be a time slot number or an identification signal that can identify the time slot.

According to the above technical solutions in this embodiment, under the fixed-length air interface time slot type, the wireless management station can acquire the synchronization information such as the signal synchronization period, the wireless frame length, the time slot length, the frame identifier of the reference wireless frame, the time slot identifier of the reference time slot, the time difference, and the wireless transmission delay, and send them to the wireless terminal station, thereby achieving the acquisition of synchronization information. This facilitates the subsequent synchronization processing of the synchronization signal by the wireless terminal station based on this synchronization information and in combination with the second signal synchronization method in this network scenario.

Further, based on the second embodiment, in a fifth embodiment of the present application, step S130 includes:
step S331, in response to that the signal synchronization mode is the third signal synchronization mode, determining a time slot identifier of a reference time slot.

In this embodiment, the time slot identifier of the reference time slot can be designated.

Step S332, determining a time difference between a start position of the reference time slot and an end position of a designated synchronization signal.

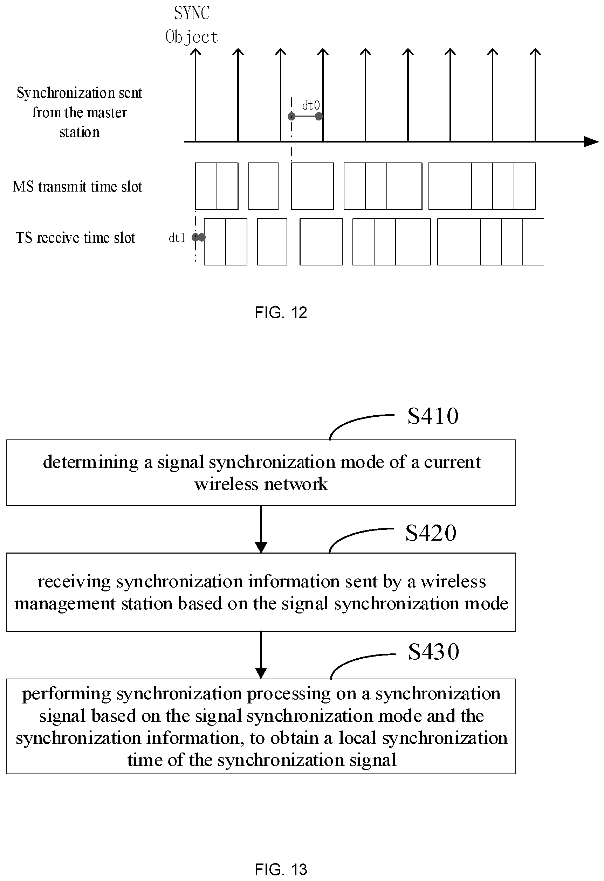

In this embodiment, the reference time slot can be arbitrarily designated, and the designated synchronization signal can also be arbitrarily selected. The time difference can be greater than or equal to 0 and the time difference is less than the signal synchronization period. The time corresponding to the start position of the reference time slot and the time corresponding to the end position of the designated synchronization signal can be acquired, and the time difference between the start position of the reference time slot and the end position of the designated synchronization signal is determined according to the difference between these two times. This time difference can be denoted as dt0, such as the dt0 determined in FIG. 12. The condition that dt0 needs to satisfy is: dt0≥0 and dt0<T, and the starting position of the designated synchronization signal is earlier than the starting position of the reference time slot.

Step S333, measuring a wireless transmission delay between the wireless management station and the wireless terminal station.

In this embodiment, the wireless transmission delay dt1 between the wireless terminal station and the wireless management station is measured. The wireless transmission delay may be different for each wireless terminal station, and the wireless transmission delay is sent to the corresponding wireless terminal station.

Step S334, obtaining the signal synchronization period in the current wired network.

Step S335, determining the signal synchronization period, the time difference, the wireless transmission delay, and the time slot identifier of the reference time slot as the synchronization information corresponding to the synchronization signal.

In this embodiment, after receiving the above synchronization information, the wireless management station can package the above synchronization information and notify the wireless terminal station. The signal synchronization period, the time difference, and the time slot identifier of the reference time slot are consistent for all wireless terminal stations, while the wireless transmission delay is specific to each wireless terminal station and may be different among different wireless terminal stations.

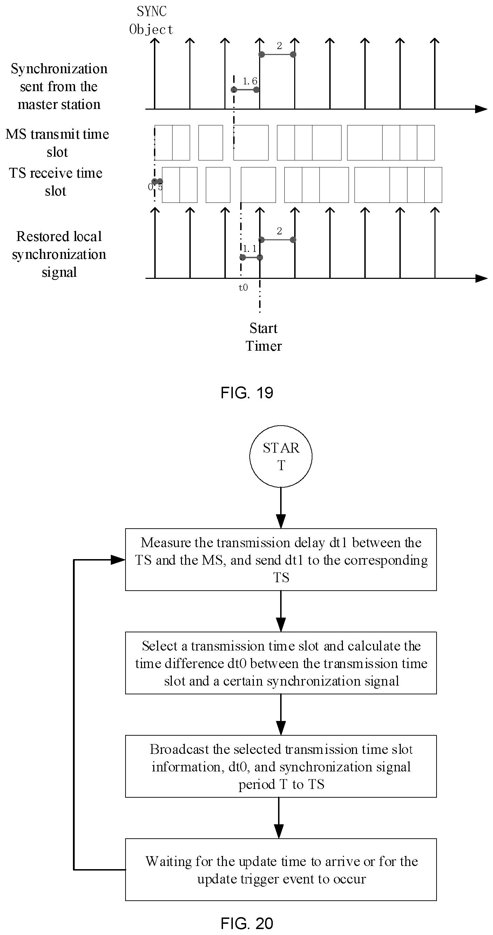

In an embodiment, referring to FIG. 20, when the third signal synchronization mode is adopted, wait for the moment when any one of the above time difference, wireless transmission delay, and signal synchronization period needs to be updated, or an event triggering the update occurs, and then repeat the above acquisition of one or even multiple of the time difference, wireless transmission delay, and signal synchronization period.

According to the above technical solutions in this embodiment, under the variable-length air interface time slot type, the wireless management station can acquire synchronization information such as the signal synchronization period, the time difference, the wireless transmission delay, and the time slot identifier of the reference time slot, and send them to the wireless terminal station, thereby achieving the acquisition of synchronization information. This facilitates the subsequent synchronization processing of the synchronization signal by the wireless terminal station based on this synchronization information and in combination with the third signal synchronization method in this network scenario.

Based on the same inventive concept, as shown in FIG. 13, in a sixth embodiment of the present application, the signal synchronization method of the present application is applied to a wireless terminal station, and the wireless terminal station may be a terminal, an end node, etc. Specifically, the signal synchronization method of the present application includes:
step S410, determining a signal synchronization mode of a current wireless network.

In this embodiment, different air interface time slot types correspond to different signal synchronization modes, so as to achieve signal synchronization according to different wireless network scenarios. The signal synchronization mode of the current wireless network can be determined according to the air interface time slot type of the current wireless network. The signal synchronization mode is used to synchronize the synchronization signal sent by the master station across all slave stations in the wired wireless network. The present application proposes multiple different signal synchronization modes according to the different air interface time slot types of the wireless network.

In an embodiment, the signal synchronization modes of the present application include a first signal synchronization mode, a second signal synchronization mode, and a third signal synchronization mode.

In this embodiment, when the wireless network adopts a frame structure with fixed-length time slots, the present application includes a synchronization method for a scenario where the signal synchronization period is an integer multiple of the wireless frame length, that is, the first signal synchronization mode. The present application also includes a synchronization method for a scenario where the signal synchronization period is not an integer multiple of the wireless frame length but the signal synchronization period is an integer multiple of the time slot length, that is, the second signal synchronization mode. The present application also includes a synchronization method for a scenario where the signal synchronization period is not an integer multiple of the wireless frame length and the signal synchronization period is not an integer multiple of the time slot length, that is, the third signal synchronization mode.

Step S420, receiving synchronization information sent by a wireless management station based on the signal synchronization mode.

Step S430, performing synchronization processing on a synchronization signal based on the signal synchronization mode and the synchronization information, to obtain a local synchronization time of the synchronization signal.

In this embodiment, the synchronization information refers to information used to process the synchronization signal so that the synchronization signal sent by the master station can be synchronized among all slave stations in the wired-wireless network. Different signal synchronization modes correspond to different synchronization information, enabling the wireless terminal station to perform corresponding processing on the synchronization signal based on the corresponding synchronization information in different scenarios, so as to meet the signal synchronization processing requirements of different wireless network scenarios.

According to the above technical solutions in this embodiment, the wireless terminal station of the present application can receive the synchronization information corresponding to the synchronization signal based on the signal synchronization mode, and perform synchronization processing on the synchronization signal based on the synchronization information. Because it is possible to flexibly determine a corresponding signal synchronization mode for different wireless network scenarios, the wireless terminal station can perform synchronization processing on the synchronization signal based on different signal synchronization modes and corresponding synchronization information, thereby satisfying signal synchronization requirements in different wireless network scenarios.

Further, based on the sixth embodiment, in a seventh embodiment of the present application, step S420 includes:
step S421, in response to that the signal synchronization mode is a first signal synchronization mode, receiving the synchronization information sent by the wireless management station including a signal synchronization period, a wireless frame length, a frame identifier of a reference wireless frame, a time difference, and a wireless transmission delay.

Step S422, in response to that the signal synchronization mode is a second signal synchronization mode, receiving the synchronization information sent by the wireless management station including a signal synchronization period, a wireless frame length, a time slot length, a frame identifier of a reference wireless frame, a time slot identifier of a reference time slot, a time difference, and a wireless transmission delay.

Step S423, in response to that the signal synchronization mode is a third signal synchronization mode, receiving the synchronization information sent by the wireless management station including a signal synchronization period, a time difference, a wireless transmission delay, and a time slot identifier of a reference time slot.

In this embodiment, the present application denotes the signal synchronization period as T, the wireless frame length as F, the frame identifier of the reference wireless frame as f0, the time difference as dt0, the wireless transmission delay as dt1, the time slot length as S, and the time slot identifier of the reference time slot as p0. Under different signal synchronization modes, the synchronization information sent by the wireless management station to the wireless terminal station is different, thereby enabling the acquisition of synchronization information in different wireless network scenarios, and performing corresponding signal synchronization processing on the synchronization signal in different scenarios.

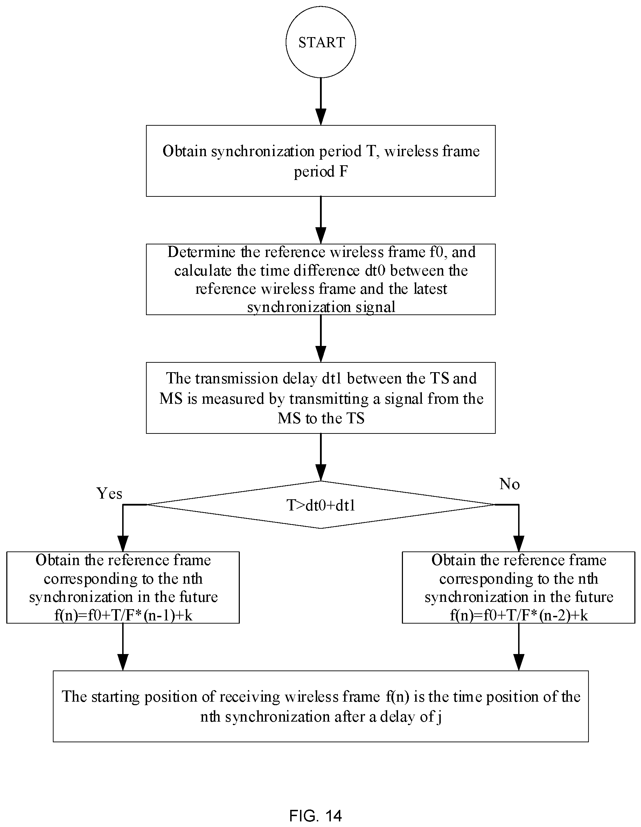

Further, based on the seventh embodiment, referring to FIG. 14, in an eighth embodiment of the present application, step S430 includes:
step S431, in response to that the signal synchronization mode is the first signal synchronization mode, determining a first parameter value and a second parameter value according to the time difference, the wireless transmission delay, the signal synchronization period, and the wireless frame length, and determining a wireless frame corresponding to the synchronization signal according to the frame identifier of the reference wireless frame, the signal synchronization period, the wireless frame length, a sequence number of the synchronization signal, and the first parameter value.

In this embodiment, the first parameter value and the second parameter value are calculated intermediate values. The first parameter value is a non-negative integer, which is a multiple. The second parameter value may be a delay value of the synchronization signal, and the second parameter value is a remainder. The first parameter value and the second parameter value can be calculated based on a preset formula in combination with the time difference, the wireless transmission delay, the signal synchronization period, and the wireless frame length, and then the frame identifier of the wireless frame corresponding to the synchronization signal is determined on the basis of the first parameter value and the second parameter value.

The present application denotes the first parameter value as k, and the second parameter value as j.

Step S432, determining a start position of the wireless frame corresponding to the synchronization signal.

In this embodiment, after determining the frame identifier of the wireless frame corresponding to the synchronization signal, the start position of the wireless frame is acquired, that is, the reception start time position of the wireless frame.

Step S433, delaying the start position based on the second parameter value to obtain the local synchronization time of the synchronization signal.

In this embodiment, the start position is delayed by the second parameter value, thereby obtaining the time position of the synchronization signal, that is, the local synchronization time.

According to the above technical solutions in this embodiment, the present application achieves synchronization processing of the synchronization signal through the first signal synchronization mode, achieving signal synchronization in a scenario where the signal synchronization period is an integer multiple of the wireless frame length.

In an embodiment, step S431 includes:
step S4311, determining a total time according to the time difference and the wireless transmission delay.

In this embodiment, the time difference and the wireless transmission delay are added together to obtain the total time, that is, dt0+dt1.

Step S4312, determining whether the signal synchronization period is greater than the total time.

In this embodiment, it is determined whether the signal synchronization period is greater than the total time, which facilitates determining the corresponding synchronization mode subsequently.

If it is determined that the signal synchronization period is greater than the total time, executing step S4313, letting T-(dt0+dt1)=k*F+j, and determining the wireless frame corresponding to the synchronization signal according to f(n)=f0+T/F*(n-1)+k.

If it is determined that the signal synchronization period is not greater than the total time, executing step S4314, letting 2T-(dt0+dt1)=k*F+j, and determining the wireless frame corresponding to the synchronization signal according to f(n)=f0+T/F*(n-2)+k.

In this embodiment, T is the signal synchronization period, dt0 is the time difference, dt1 is the wireless transmission delay, k is the first parameter value, F is the wireless frame length, j is the second parameter value, f0 is the frame identifier of the reference wireless frame, and n is the sequence number of the synchronization signal. The n is a positive integer, the first parameter value is a non-negative integer, the second parameter value is greater than 0 and less than the wireless frame length, and f(n) is the frame identifier of the wireless frame corresponding to the synchronization signal.

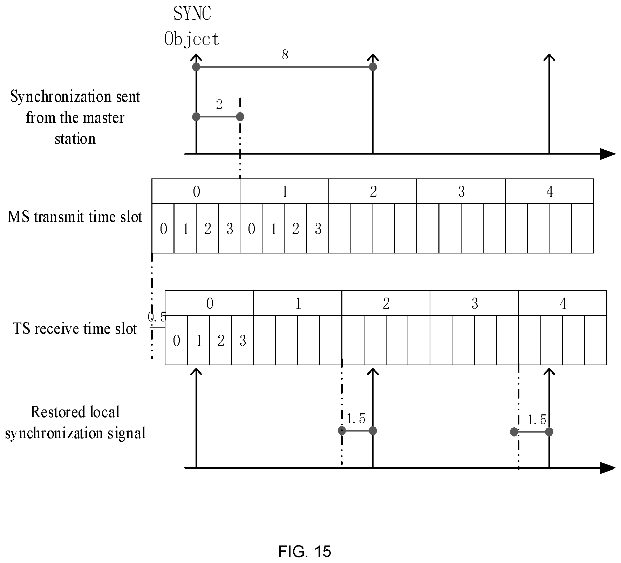

Exemplarily, referring to FIG. 15, it is assumed that the signal synchronization period is 8, the wireless frame length is 4, one wireless frame contains 4 time slots, the time slot length is 1, and the wireless transmission delay is 0.5.

Step 1, parameters T=8 and F=4 are acquired. Because T/F=2, this method can be applied.

Step 2, the frame identifier of the selected reference wireless frame is f0=1 (and taking the start position of this wireless frame as a reference), and the time difference between the start position of the latest synchronization signal and the start position of this reference wireless frame is determined as dt0=2.

Step 3, the wireless transmission delay dt1=0.5 between a certain TS and the MS is measured.

Step 4, after acquiring the above parameters (T=8, F=4, f0=1, dt0=2, dt1=0.5), the TS determines whether T>dt0+dt1 holds true. If it holds true, execute Step 5 and Step 6; if it does not hold true, execute Step 7 and Step 8.

Step 5, set T-(dt0+dt1)=5.5=k*F+j, then k=1, j=1.5; f(n)=1+2*(n-1)+1, where n=1, 2, 3..., that is, wireless frames with frame numbers 2, 4, 6, 8, ....

Step 6, a delay of 1.5 time units is applied after the reception time of the wireless frame f(n)=2+2*(n-1), which is the local synchronization time of the TS. This local synchronization time is consistent with the synchronization time of the master station, thereby completing the synchronization of all slave stations in the entire wired-wireless converged industrial network.

Step 7, setting 2T-(dt0+dt1)=13.5=k*F+j, then k=3, j=1.5; f(n)=1+2*(n-2)+1, where n=2, 3, ..., that is, wireless frames with frame numbers 2, 4, 6, 8, ...;

Step 8, a delay of 1.5 time units is applied after the reception time of the wireless frame f(n)=2+2*(n-2), which is the local synchronization time of the TS. This local synchronization time is consistent with the synchronization time of the master station, thereby completing the synchronization of all slave stations in the entire wired-wireless converged industrial network.

According to the above technical solutions in this embodiment, by determining the relationship between the signal synchronization period and the total time, the calculation method of the wireless frame corresponding to the synchronization signal is determined, thereby improving the accuracy of signal synchronization in the scenario where the signal synchronization period is an integer multiple of the wireless frame length.

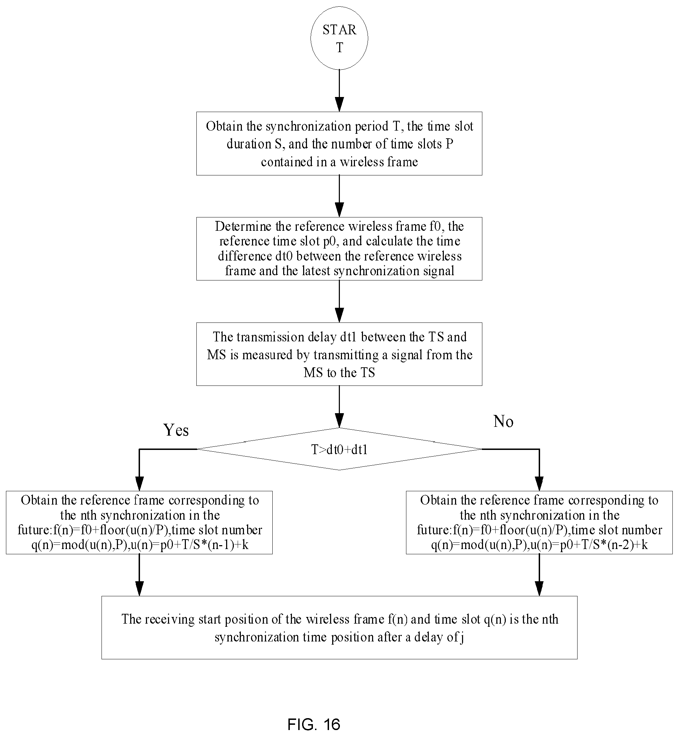

Further, based on the seventh embodiment, referring to FIG. 16, in a ninth embodiment of the present application, step S430 includes:
step S531, when the signal synchronization mode is the second signal synchronization mode, determining a first parameter value and a second parameter value according to the time difference, the wireless transmission delay, the signal synchronization period, and the wireless frame length, and determining a time slot corresponding to the synchronization signal according to the time slot identifier of the reference time slot, the signal synchronization period, the time slot length, a sequence number of the synchronization signal, and the first parameter value.

In this embodiment, the first parameter value and the second parameter value are calculated intermediate values. The first parameter value is a non-negative integer, which is a multiple. The second parameter value may be a delay value of the synchronization signal, and the second parameter value is a remainder. The first parameter value and the second parameter value can be calculated based on a preset formula in combination with the time difference, the wireless transmission delay, the signal synchronization period, and the wireless frame length, and then the time slot corresponding to the synchronization signal is determined on the basis of the first parameter value and the second parameter value, according to the time slot identifier of the reference time slot, the signal synchronization period, the time slot length, the sequence number of the synchronization signal, and the first parameter value.

Step S532, determining a frame identifier of a wireless frame where the time slot corresponding to the synchronization signal is located, according to the time slot corresponding to the synchronization signal, the number of time slots in a single wireless frame, and the frame identifier of the reference wireless frame.

In this embodiment, the number of time slots in a single wireless frame can be determined according to actual situations, and the number of time slots in a single wireless frame can be determined according to the wireless frame length and the time slot length.

Step S533, determining a time slot identifier corresponding to the synchronization signal in the wireless frame, according to the time slot corresponding to the synchronization signal and the number of time slots in the single wireless frame.

In this embodiment, since each wireless frame includes multiple time slots, for example, referring to FIG. 3, the time slots included in Frame0 are respectively: Slot0, Slot1, Slot2, and Slot3; the time slots included in Frame1 are respectively: Slot4, Slot5, Slot6, and Slot7. Slot0 and Slot4 have the same time slot identifier "0", Slot2 and Slot5 have the same time slot identifier "1", Slot3 and Slot6 have the same time slot identifier "2", and Slot4 and Slot7 have the same time slot identifier "3". When it is determined that the time slot identifier of the time slot corresponding to the synchronization signal is "1", its corresponding wireless frames include Frame0 (corresponding frame identifier is 0) and Frame1 (corresponding frame identifier is 1). Therefore, it is further necessary to designate the frame identifier of the wireless frame where the time slot of the synchronization signal is located. When it is determined that the frame identifier of the wireless frame is 0, the corresponding time slot is Slot2, and the corresponding time slot identifier is "1".

Step S534, determining a start position of a time slot corresponding to the time slot identifier.

In this embodiment, after determining the time slot identifier corresponding to the synchronization signal, the start position of the time slot corresponding to the time slot identifier is acquired, that is, the reception start time position of the time slot.

Step S535, delaying the start position of the time slot corresponding to the time slot identifier based on the second parameter value, to obtain the local synchronization time of the synchronization signal.

In this embodiment, the start position of the time slot corresponding to the time slot identifier is delayed by the second parameter value, thereby obtaining the time position of the synchronization signal, that is, the local synchronization time.

According to the above technical solutions in this embodiment, the present application achieves synchronization processing of the synchronization signal through the second signal synchronization mode, achieving signal synchronization in a scenario where the signal synchronization period is not an integer multiple of the wireless frame length but the signal synchronization period is an integer multiple of the time slot length.

In an embodiment, step S531 includes:
step S5311, determining a total time according to the time difference and the wireless transmission delay; and
step S5312, determining whether the signal synchronization period is greater than the total time.

If the signal synchronization period is greater than the total time, execute step S5313, setting T-(dt0+dt1)=k*F+j, and determining the time slot corresponding to the synchronization signal according to u(n)=p0+T/S*(n-1)+k.

If the signal synchronization period is not greater than the total time, execute step S5314, setting 2T-(dt0+dt1)=k*F+j, and determining the time slot corresponding to the synchronization signal according to u(n)=p0+T/S*(n-2)+k.

In this embodiment, T is the signal synchronization period, dt0 is the time difference, dt1 is the wireless transmission delay, k is the first parameter value, F is the wireless frame length, j is the second parameter value, p0 is the time slot identifier of the reference time slot, S is the time slot length, and n is the sequence number of the synchronization signal. The n is a positive integer, the first parameter value is a non-negative integer, the second parameter value is greater than 0 and less than the wireless frame length, and u(n) is the time slot corresponding to the synchronization signal.

In an embodiment, step S532 includes:
step S5321, determining the frame identifier of the wireless frame where the time slot corresponding to the synchronization signal is located according to f(n)=f0+floor(u(n)/P).

In this embodiment, the f0 is the frame identifier of the reference wireless frame, u(n) is the time slot corresponding to the synchronization signal, P is the number of time slots in the single wireless frame, and floor(u(n)/P) represents an integer part of u(n)/P.

In an embodiment, step S533 includes:
step S5331, determining the time slot identifier corresponding to the synchronization signal in the wireless frame according to q(n)=mod(u(n), P).

In this embodiment, the u(n) is the time slot corresponding to the synchronization signal, P is the number of time slots in the single wireless frame, and mod(u(n), P) represents a fractional part of u(n)/P.

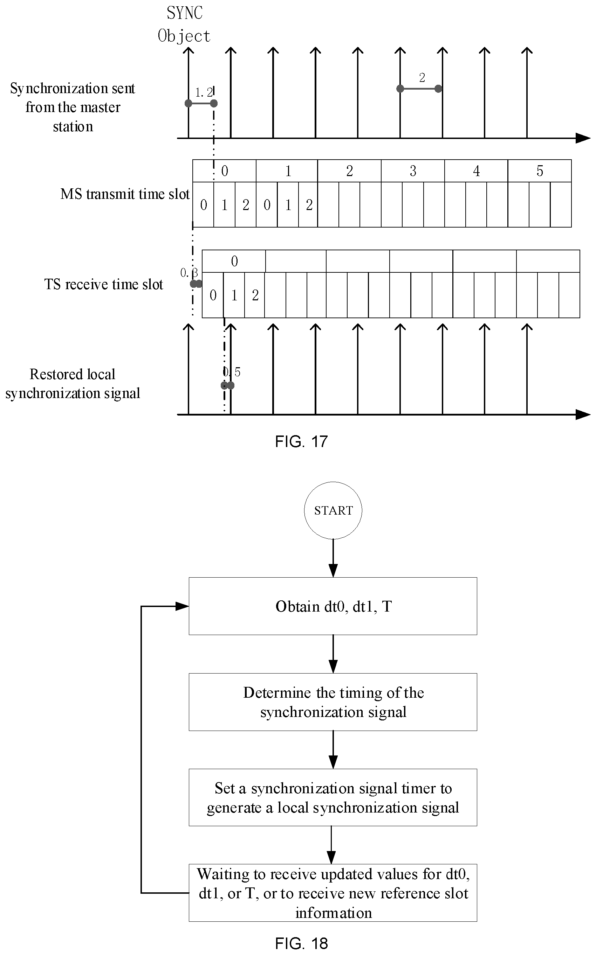

Exemplarily, referring to FIG. 17, assume that the signal synchronization period is 2, the wireless frame length is 3, one wireless frame contains 3 time slots, the time slot length is 1, and the transmission delay is 0.3.

Step 1, acquire parameters T=2, F=3, S=1. T/S=3, so this method is applicable.

Step 2, determine the reference time slot. The frame identifier of the reference wireless frame corresponding to the reference time slot is f0=0, the time slot identifier is p0=1, and determine the time difference dt0=1.2 between the start position of the latest synchronization signal and the start position of this reference time slot.

Step 3, measure the wireless transmission delay dt1=0.3 between the TS and the MS.

Step 4, after the TS acquires the above parameters (T=2, F=3, f0=0, p0=1, dt0=1.2, dt1=0.3), determine that T>dt0+dt1 holds true.

Step 5, set T-(dt0+dt1)=0.5=k*F+j, where k=0, j=0.5. Obtain the time slot corresponding to the n-th future synchronization signal, denoted as u(n)=p0+T/S*(n-1)+k=1+2(n-1)=2n-1, then the frame number of the frame where the reference time slot is located is f(n)=f0+floor(u(n)/P)=0+floor((2n-1)/3)=0, 1, 1, 2, 3, ..., and the time slot number is q(n)=mod(2n-1, 3)=1, 0, 2, 1, 0, ....

Step 7, determine the reception start position of the time slot q(n) of the wireless frame f(n) (wireless frame 0 time slot 1, wireless frame 1 time slot 0, wireless frame 1 time slot 2, wireless frame 2 time slot 1, wireless frame 3 time slot 0...). After a delay of 0.5, the n-th synchronization time is obtained, that is, the local synchronization time. This local synchronization time is consistent with the synchronization time of the master station, thereby completing the synchronization of all slave stations in the entire wired-wireless converged industrial network.

According to the above technical solutions in this embodiment, by determining the relationship between the signal synchronization period and the total time, the calculation method of the wireless frame corresponding to the synchronization signal is determined, thereby improving the accuracy of signal synchronization in the scenario where the signal synchronization period is not an integer multiple of the wireless frame length but the signal synchronization period is an integer multiple of the time slot length.

Further, based on the seventh embodiment, referring to FIG. 18, in a tenth embodiment of the present application, step S430 includes:
step S631, when the signal synchronization mode is the third signal synchronization mode, determining a reference time slot corresponding to the time difference, and acquiring a reception time of the reference time slot;
step S632, determining a generation time of the synchronization signal according to the reception time of the reference time slot, the wireless transmission delay, the time difference, a sequence number of the synchronization signal, and the signal synchronization period; and
step S633, setting a timer at the generation time of the synchronization signal, and determining a timeout moment of the timer as the local synchronization time of the synchronization signal, where a timing duration of the timer is the same as the signal synchronization period.

In this embodiment, the required parameters dt0, dt1, and T are obtained. The reference time slot corresponding to dt0 is identified, thereby calculating the generation time of the synchronization signal. Let the reception time of receiving the reference time slot be t0, then the generation time of the synchronization signal is t(n)=t0-dt1+dt0+n*T, where n=0, 1, 2, 3, ... A cyclic repeating timer (with a timing duration of T) is set at any t(n) time,, and each timeout moment of the timer is the local synchronization time.

In an embodiment, when the third signal synchronization mode is adopted, the wireless management station waits for the moment when any one of the above time difference, wireless transmission delay, and signal synchronization period needs to be updated, or an event triggering the update occurs, and then repeats the above acquisition of one or even multiple of the time difference, wireless transmission delay, and signal synchronization period, and sends them to the wireless terminal station.

In this embodiment, when new values of dt0, dt1, T (any one) are received, or the reference time slot is updated, the relevant steps in FIG. 18 are repeated.

According to the above technical solutions in this embodiment, the present application achieves synchronization processing of the synchronization signal through the third signal synchronization mode, achieving signal synchronization in a scenario where the wireless network adopts a frame structure with variable-length time slots.

In an embodiment, step S632 includes:
step S6321, determining the generation time of the synchronization signal according to t(n)=t0-dt1+dt0+n*T.

In this embodiment, t0 is the reception time of the reference time slot, dt1 is the wireless transmission delay, dt0 is the time difference, n is the sequence number of the synchronization signal, T is the signal synchronization period, and t(n) is the generation time of the synchronization signal.

Exemplarily, referring to FIG. 19, assume that the signal synchronization period is T=8, and the wireless transmission delay is 0.5.

On the MS side, referring to FIG. 20:
Step 1, measure the wireless transmission delay dt1=0.5 between the TS and the MS.

Step 2, select a transmission time slot, such as the gray-filled time slot shown in FIG. 19, and calculate the time difference dt0=1.6 between the transmission time slot and a certain synchronization signal.

Step 3, send the selected transmission time slot information (such as the time slot number, or an identification signal that can identify the time slot, etc.), dt0, and the synchronization signal period T to all TSs.

On the TS side, referring to FIG. 18:
Step 1, acquire the required parameters dt0=1.6, dt1=0.5, and T=2.

Step 2, identify the reference time slot corresponding to dt0. Assume that the reception time of the reference time slot is t0, then the generation time of the synchronization signal is t(n)=t0-0.5+1.6+n*2=t0+1.1+2n, where n=0, 1, 2, 3, ... Select any t(n) time to set a cyclic repeating timer (the timing duration is T=2), and each timeout moment of the timer is the synchronization time. This synchronization time is consistent with the synchronization time of the master station, thereby completing the synchronization of all slave stations in the entire wired-wireless converged industrial network.

According to the above technical solutions in this embodiment, by establishing a formula among the reception time of the reference time slot, the wireless transmission delay, the time difference, the sequence number of the synchronization signal, the signal synchronization period, and the generation time of the synchronization signal, the accuracy of signal synchronization in the scenario where the wireless network adopts a frame structure with variable-length time slots is improved.

It should be emphasized that for specific embodiments of some steps of the wireless terminal station, reference may be made to the relevant descriptions in the embodiments of the wireless management station, which will not be repeated here.

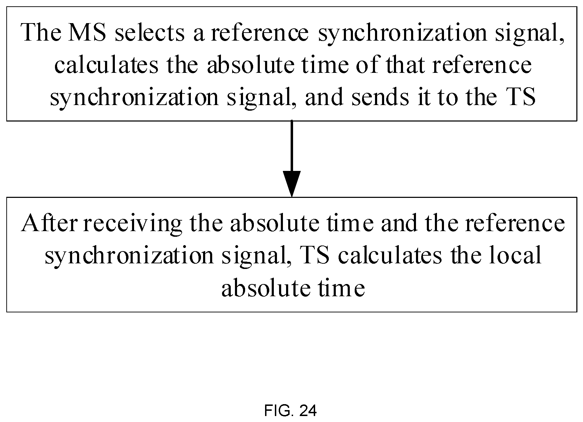

Further, based on the seventh embodiment, referring to FIG. 24, in an eleventh embodiment of the present application, after step S430, the method further includes:
step S710, receiving a reference synchronization signal sent by the wireless management station, and an absolute time of the reference synchronization signal.

In this embodiment, the wireless management station will select a reference synchronization signal, and after acquiring the absolute time corresponding to the reference synchronization signal, send the absolute time of the reference synchronization signal and corresponding reference synchronization signal indication information to the wireless terminal station. The wireless terminal station receives the reference synchronization signal and the absolute time of the reference synchronization signal sent by the wireless management station.

In this embodiment, the absolute time of the reference synchronization signal is the standard time, which can be selected as Coordinated Universal Time (UTC), or standard time in other time zones. The local absolute time is a representation relative to a certain standard time (i.e., absolute time), so it is necessary to first acquire the absolute time of the reference synchronization signal.

Step S720, determining a local absolute time according to the reference synchronization signal and the absolute time.

In this embodiment, after receiving the reference synchronization signal and the absolute time of the reference synchronization signal, the wireless terminal station finds the moment of the reference synchronization signal, thereby calculating the local absolute time.

In this embodiment, the local absolute time refers to a local time representation relative to a certain absolute time (such as UTC), which can be used to synchronize the time among various nodes in a distributed system. The local absolute time is usually represented in milliseconds and is a timestamp starting from a certain specific time point.

Due to time zone differences among different regions on the Earth, it is necessary to obtain a time offset between the local time and the absolute time. For example, the time in the East Eighth Zone where China is located differs from the UTC time by 8 hours, so the local time offset is +8 hours. By subtracting the local time offset from the current local time and converting the result into milliseconds, the local absolute time can be obtained.

For example, assuming the current standard time is UTC time, the current local time is 10:30 on December 1, 2023, and the offset is +8 hours, the formula for calculating the local absolute time is:
Local absolute time = milliseconds of (10:30 on December 1, 2023 - 8 hours)
Simplified to: Local absolute time = milliseconds of (2:30 on December 1, 2023)

The calculated local absolute time can be used for the time of various nodes in the wireless communication system, thereby ensuring that they have a consistent time reference.

The embodiments of the present application provide embodiments of the signal synchronization method. It should be noted that although a logical sequence is shown in the flowcharts, in some cases, the steps shown or described may be executed in a sequence different from the one here.

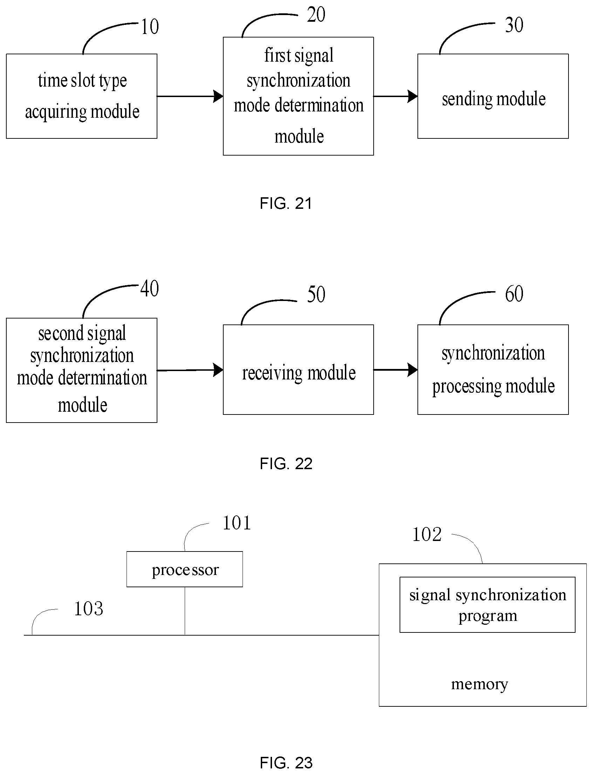

As shown in FIG. 21, the present application provides a signal synchronization system, and the signal synchronization system includes: a time slot type acquiring module 10, a first signal synchronization mode determination module 20, and a sending module 30.

The time slot type acquiring module 10 is configured to acquire an air interface time slot type of a current wireless network.

The first signal synchronization mode determination module 20 is configured to determine a signal synchronization mode according to the air interface time slot type.

The sending module 30 is configured to determine synchronization information corresponding to a synchronization signal based on the signal synchronization mode, and send the synchronization information to a wireless terminal station, so that the wireless terminal station performs synchronization processing on the synchronization signal based on the synchronization information.

As shown in FIG. 22, the present application provides a signal synchronization system, and the signal synchronization system includes: a second signal synchronization mode determination module 40, a receiving module 50, and a synchronization processing module 60.

The second signal synchronization mode determination module 40 is configured to determine a signal synchronization mode of a current wireless network.

The receiving module 50 is configured to receive synchronization information sent by a wireless management station based on the signal synchronization mode.

The synchronization processing module 60 is configured to perform synchronization processing on a synchronization signal based on the signal synchronization mode and the synchronization information, to obtain a local synchronization time of the synchronization signal.

The specific implementations of the signal synchronization system of the present application are basically the same as the above embodiments of the signal synchronization method, and will not be repeated here.

Referring to FIG. 23, as an implementation manner, the wireless management station or the wireless terminal station includes: a processor 101, such as a CPU, a memory 102, and a communication bus 103. The communication bus 103 is used to implement connection and communication between these components. The processor 101 is used to call application programs to perform control operations.

The memory 102 may be a high-speed RAM memory, or a stable memory, such as a disk memory.

It can be understood that, in an embodiment, a signal synchronization program is stored in the memory 102, or stored in a computer-readable storage medium. When the processor 101 calls the signal synchronization program from the memory 102 or the computer-readable storage medium, the following operations are performed:
acquiring an air interface time slot type of a current wireless network;
determining a signal synchronization mode according to the air interface time slot type; and
determining synchronization information corresponding to a synchronization signal based on the signal synchronization mode, and sending the synchronization information to a wireless terminal station, so that the wireless terminal station performs synchronization processing on the synchronization signal based on the synchronization information.

In an embodiment, when the processor 101 calls the signal synchronization program from the memory 102 or the computer-readable storage medium, the following operations are performed:
determining a signal synchronization mode of a current wireless network;
receiving synchronization information sent by a wireless management station based on the signal synchronization mode; and
performing synchronization processing on a synchronization signal based on the signal synchronization mode and the synchronization information, to obtain a local synchronization time of the synchronization signal.

Based on the same inventive concept, an embodiment of the present application further provides a computer-readable storage medium. The computer-readable storage medium stores a signal synchronization program, and when the signal synchronization program is executed by a processor, the various steps of the signal synchronization method described above are implemented, and the same technical effects can be achieved. To avoid repetition, details are not described herein again.

Since the storage medium provided in the embodiments of the present application is the storage medium used to implement the method in the embodiments of the present application, those skilled in the art can understand the specific structure and variations of the storage medium based on the method introduced in the embodiments of the present application, and therefore will not be repeated here. Any storage medium used in the method in the embodiments of the present application falls within the scope of the present application.

It should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a . . ." does not exclude the existence of other identical elements in the process, method, article or system that includes the element.

The serial numbers of the foregoing embodiments of the present application are only for description, and do not represent the advantages and disadvantages of the embodiments.

Through the description of the above embodiment, those skilled in the art can clearly understand that the above-mentioned embodiments can be implemented by software plus a necessary general hardware platform, of course, it can also be implemented by hardware, but in many cases the former is a better implementation. Based on this understanding, the technical solution of the present application can be embodied in the form of software product in essence or the part that contributes to the existing technology. The computer software product is stored on a storage medium (such as ROM/RAM, magnetic disk, optical disk) as described above, including several instructions to cause a terminal device (which can be a mobile phone, a computer, a server, a television, or a network device, etc.) to execute the method described in each embodiment of the present application.

The above are only some embodiments of the present application, and do not limit the scope of the present application thereto. Under the concept of the present application, equivalent structural transformations made according to the description and drawings of the present application, or direct/indirect application in other related technical fields are included in the scope of the present application.

## Claims

1. A signal synchronization method, applied to a wireless management station, **characterized by** comprising:
obtaining an air interface time slot type of a current wireless network;
determining a signal synchronization mode according to the air interface time slot type; and
determining synchronization information corresponding to a synchronization signal based on the signal synchronization mode, and sending the synchronization information to a wireless terminal station, so that the wireless terminal station performs synchronization processing on the synchronization signal based on the synchronization information.

2. The signal synchronization method according to claim 1, wherein the determining the signal synchronization mode according to the air interface time slot type comprises:
in response to that the air interface time slot type is a fixed-length air interface time slot type, determining the signal synchronization mode as a first signal synchronization mode or a second signal synchronization mode; and
in response to that the air interface time slot type is a variable-length air interface time slot type, determining the signal synchronization mode as a third signal synchronization mode.

3. The signal synchronization method according to claim 2, wherein the in response to that the air interface time slot type is the fixed-length air interface time slot type, determining the signal synchronization mode as the first signal synchronization mode or the second signal synchronization mode comprises:
obtaining a signal synchronization period in a current wired network, and obtaining a wireless frame length and a time slot length;
in response to that the signal synchronization period is an integer multiple of the wireless frame length and the signal synchronization period is an integer multiple of the time slot length, determining the signal synchronization mode as the first signal synchronization mode;
in response to that the signal synchronization period is not an integer multiple of the wireless frame length and the signal synchronization period is an integer multiple of the time slot length, determining the signal synchronization mode as the second signal synchronization mode; and
in response to that the signal synchronization period is not an integer multiple of the wireless frame length and the signal synchronization period is not an integer multiple of the time slot length, determining the signal synchronization mode as the second signal synchronization mode.

4. The signal synchronization method according to claim 2 or 3, wherein the determining the synchronization information corresponding to the synchronization signal based on the signal synchronization mode comprises:
in response to that the signal synchronization mode is the first signal synchronization mode, determining a frame identifier of a reference wireless frame;
determining a time difference between a start position of a latest synchronization signal and a start position of the reference wireless frame, wherein the time difference is greater than or equal to 0 and the time difference is less than the signal synchronization period in a wired network;
measuring a wireless transmission delay between the wireless management station and the wireless terminal station;
obtaining the signal synchronization period in the current wired network, and obtaining the wireless frame length; and
determining the signal synchronization period, the wireless frame length, the frame identifier of the reference wireless frame, the time difference, and the wireless transmission delay as the synchronization information corresponding to the synchronization signal.

5. The signal synchronization method according to claim 2 or 3, wherein the determining the synchronization information corresponding to the synchronization signal based on the signal synchronization mode comprises:
in response to that the signal synchronization mode is the second signal synchronization mode, determining a time slot identifier of a reference time slot and a frame identifier of a reference wireless frame where the reference time slot is located;
determining a time difference between a start position of a latest synchronization signal and a start position of the reference time slot, wherein the time difference is greater than or equal to 0 and the time difference is less than the signal synchronization period in the current wired network;
measuring a wireless transmission delay between the wireless management station and the wireless terminal station;
obtaining the signal synchronization period in the current wired network, and obtaining the wireless frame length and the time slot length; and
determining the signal synchronization period, the wireless frame length, the time slot length, the frame identifier of the reference wireless frame, the time slot identifier of the reference time slot, the time difference, and the wireless transmission delay as the synchronization information corresponding to the synchronization signal.

6. The signal synchronization method according to claim 2 or 3, wherein the determining the synchronization information corresponding to the synchronization signal based on the signal synchronization mode comprises:
in response to that the signal synchronization mode is the third signal synchronization mode, determining a time slot identifier of a reference time slot;
determining a time difference between a start position of the reference time slot and an end position of a designated synchronization signal;
measuring a wireless transmission delay between the wireless management station and the wireless terminal station;
obtaining the signal synchronization period in the current wired network; and
determining the signal synchronization period, the time difference, the wireless transmission delay, and the time slot identifier of the reference time slot as the synchronization information corresponding to the synchronization signal.

7. A signal synchronization method, applied to a wireless terminal station, **characterized by** comprising:
determining a signal synchronization mode of a current wireless network;
receiving synchronization information sent by a wireless management station based on the signal synchronization mode; and
performing synchronization processing on a synchronization signal based on the signal synchronization mode and the synchronization information, to obtain a local synchronization time of the synchronization signal.

8. The signal synchronization method according to claim 7, wherein the receiving the synchronization information sent by the wireless management station based on the signal synchronization mode comprises:
in response to that the signal synchronization mode is a first signal synchronization mode, receiving the synchronization information sent by the wireless management station, wherein the synchronization information comprises a signal synchronization period, a wireless frame length, a frame identifier of a reference wireless frame, a time difference, and a wireless transmission delay;
in response to that the signal synchronization mode is a second signal synchronization mode, receiving the synchronization information sent by the wireless management station, wherein the synchronization information comprises a signal synchronization period, a wireless frame length, a time slot length, a frame identifier of a reference wireless frame, a time slot identifier of a reference time slot, a time difference, and a wireless transmission delay; and
in response to that the signal synchronization mode is a third signal synchronization mode, receiving the synchronization information sent by the wireless management station, wherein the synchronization information comprises a signal synchronization period, a time difference, a wireless transmission delay, and a time slot identifier of a reference time slot.

9. The signal synchronization method according to claim 8, wherein the forming the synchronization processing on the synchronization signal based on the signal synchronization mode and the synchronization information, to obtain the local synchronization time of the synchronization signal comprises:
in response to that the signal synchronization mode is the first signal synchronization mode, determining a first parameter value and a second parameter value according to the time difference, the wireless transmission delay, the signal synchronization period, and the wireless frame length, and determining a wireless frame corresponding to the synchronization signal according to the frame identifier of the reference wireless frame, the signal synchronization period, the wireless frame length, a sequence number of the synchronization signal, and the first parameter value;
determining a start position of the wireless frame corresponding to the synchronization signal; and
delaying the start position based on the second parameter value, to obtain the local synchronization time of the synchronization signal.

10. The signal synchronization method according to claim 9, wherein the determining the first parameter value and the second parameter value according to the time difference, the wireless transmission delay, the signal synchronization period, and the wireless frame length, and determining the wireless frame corresponding to the synchronization signal according to the frame identifier of the reference wireless frame, the signal synchronization period, the wireless frame length, the sequence number of the synchronization signal, and the first parameter value comprises:
determining a total time according to the time difference and the wireless transmission delay;
determining whether the signal synchronization period is greater than the total time;
in response to that the signal synchronization period is greater than the total time, setting T-(dt0+dt1)=k*F+j, and determining the wireless frame corresponding to the synchronization signal according to f(n)=f0+T/F*(n-1)+k;
in response to that the signal synchronization period is less than or equal to the total time, setting 2T-(dt0+dt1)=k*F+j, and determining the wireless frame corresponding to the synchronization signal according to f(n)=f0+T/F*(n-2)+k,
wherein T is the signal synchronization period, dt0 is the time difference, dt1 is the wireless transmission delay, k is the first parameter value, F is the wireless frame length, j is the second parameter value, f0 is the frame identifier of the reference wireless frame, n is the sequence number of the synchronization signal, the n is a positive integer, the first parameter value is a non-negative integer, and the second parameter value is greater than 0 and less than the wireless frame length.

11. The signal synchronization method according to claim 8, wherein the performing the synchronization processing on the synchronization signal based on the signal synchronization mode and the synchronization information, to obtain the local synchronization time of the synchronization signal comprises:
in response to that the signal synchronization mode is the second signal synchronization mode, determining a first parameter value and a second parameter value according to the time difference, the wireless transmission delay, the signal synchronization period, and the wireless frame length, and determining a time slot corresponding to the synchronization signal according to the time slot identifier of the reference time slot, the signal synchronization period, the time slot length, a sequence number of the synchronization signal, and the first parameter value;
determining a frame identifier of a wireless frame where the time slot corresponding to the synchronization signal is located, according to the time slot corresponding to the synchronization signal, a number of time slots in a single wireless frame, and the frame identifier of the reference wireless frame;
determining a time slot identifier corresponding to the synchronization signal in the wireless frame, according to the time slot corresponding to the synchronization signal and the number of time slots in the single wireless frame;
determining a start position of a time slot corresponding to the time slot identifier; and
delaying the start position of the time slot corresponding to the time slot identifier based on the second parameter value, to obtain the local synchronization time of the synchronization signal.

12. The signal synchronization method according to claim 11, wherein determining the first parameter value and the second parameter value according to the time difference, the wireless transmission delay, the signal synchronization period, and the wireless frame length, and determining the time slot corresponding to the synchronization signal according to the time slot identifier of the reference time slot, the signal synchronization period, the time slot length, the sequence number of the synchronization signal, and the first parameter value comprises:
determining a total time according to the time difference and the wireless transmission delay;
determining whether the signal synchronization period is greater than the total time;
in response to that the signal synchronization period is greater than the total time, setting T-(dt0+dt1)=k*F+j, and determining the time slot corresponding to the synchronization signal according to u(n)=p0+T/S*(n-1)+k;
in response to that the signal synchronization period is less than or equal to the total time, setting 2T-(dt0+dt1)=k*F+j, and determining the time slot corresponding to the synchronization signal according to u(n)=p0+T/S*(n-2)+k,
wherein T is the signal synchronization period, dt0 is the time difference, dt1 is the wireless transmission delay, k is the first parameter value, F is the wireless frame length, j is the second parameter value, p0 is the time slot identifier of the reference time slot, S is the time slot length, n is the sequence number of the synchronization signal, the n is a positive integer, the first parameter value is a non-negative integer, and the second parameter value is greater than 0 and less than the wireless frame length.

13. The signal synchronization method according to claim 11 or 12, wherein the determining the frame identifier of the wireless frame where the time slot corresponding to the synchronization signal is located, according to the time slot corresponding to the synchronization signal, the number of time slots in the single wireless frame, and the frame identifier of the reference wireless frame comprises:
determining the frame identifier of the wireless frame where the time slot corresponding to the synchronization signal is located according to f(n)=f0+floor(u(n)/P),
wherein the f0 is the frame identifier of the reference wireless frame, u(n) is the time slot corresponding to the synchronization signal, P is the number of time slots in the single wireless frame, and floor(u(n)/P) represents an integer part of u(n)/P.

14. The signal synchronization method according to claim 11 or 12, wherein the determining the time slot identifier corresponding to the synchronization signal in the wireless frame, according to the time slot corresponding to the synchronization signal and the number of time slots in the single wireless frame comprises:
determining the time slot identifier corresponding to the synchronization signal in the wireless frame according to q(n)=mod(u(n), P),
wherein the u(n) is the time slot corresponding to the synchronization signal, P is the number of time slots in the single wireless frame, and mod(u(n), P) represents a fractional part of u(n)/P.

15. The signal synchronization method according to claim 8, wherein the performing the synchronization processing on the synchronization signal based on the signal synchronization mode and the synchronization information, to obtain the local synchronization time of the synchronization signal comprises:
in response to that the signal synchronization mode is the third signal synchronization mode, determining a reference time slot corresponding to the time difference, and obtaining a reception time of the reference time slot;
determining a generation time of the synchronization signal according to the reception time of the reference time slot, the wireless transmission delay, the time difference, a sequence number of the synchronization signal, and the signal synchronization period; and
setting a timer at the generation time of the synchronization signal, and determining a timeout moment of the timer as the local synchronization time of the synchronization signal, wherein a timing duration of the timer is the same as the signal synchronization period.

16. The signal synchronization method according to claim 15, wherein the determining the generation time of the synchronization signal according to the reception time of the reference time slot, the wireless transmission delay, the time difference, the sequence number of the synchronization signal, and the signal synchronization period comprises:
determining the generation time of the synchronization signal according to t(n)=t0-dt1+dt0+n*T,
wherein t0 is the reception time of the reference time slot, dt1 is the wireless transmission delay, dt0 is the time difference, n is the sequence number of the synchronization signal, and T is the signal synchronization period.

17. The signal synchronization method according to claim 7, wherein after the performing the synchronization processing on the synchronization signal based on the signal synchronization mode and the synchronization information, to obtain the local synchronization time of the synchronization signal, the method further comprises:
receiving a reference synchronization signal sent by the wireless management station, and an absolute time of the reference synchronization signal; and
determining a local absolute time according to the reference synchronization signal and the absolute time.

18. A signal synchronization system, **characterized by** comprising:
a time slot type acquiring module, configured to acquire an air interface time slot type of a current wireless network;
a first signal synchronization mode determination module, configured to determine a signal synchronization mode according to the air interface time slot type; and
a sending module, configured to determine synchronization information corresponding to a synchronization signal based on the signal synchronization mode, and send the synchronization information to a wireless terminal station, so that the wireless terminal station performs synchronization processing on the synchronization signal based on the synchronization information; or
the signal synchronization system comprises:
a second signal synchronization mode determination module, configured to determine a signal synchronization mode of a current wireless network;
a receiving module, configured to receive synchronization information sent by a wireless management station based on the signal synchronization mode; and
a synchronization processing module, configured to perform synchronization processing on a synchronization signal based on the signal synchronization mode and the synchronization information, to obtain a local synchronization time of the synchronization signal.

19. A wireless management station, **characterized by** comprising: a memory, a processor, and a signal synchronization program stored on the memory and executable on the processor, wherein when the signal synchronization program is executed by the processor, the signal synchronization method according to any one of claims 1 to 6 is implemented.

20. A wireless terminal station, **characterized by** comprising: a memory, a processor, and a signal synchronization program stored on the memory and executable on the processor, wherein when the signal synchronization program is executed by the processor, the signal synchronization method according to any one of claims 7 to 17 is implemented.

21. A computer-readable storage medium, **characterized in that** a signal synchronization program is stored on the computer-readable storage medium, wherein when the signal synchronization program is executed by a processor, the signal synchronization method according to any one of claims 1 to 17 is implemented.
